# EUROPEAN PATENT APPLICATION

(11) **EP 4 668 923 A1**
(43) Date of publication of application: **24.12.2025**
(21) Application number: 24784086.1
(22) Date of filing: 25.03.2024
(51) Int. Cl.: H04W 64/00

(54) **COMMUNICATION METHOD AND COMMUNICATION DEVICE**

(30) Priority: 06.04.2023 CN 202310384506
(71) Applicant: Huawei Technologies Co., Ltd., Shenzhen, Guangdong 518129 (CN)
(72) Inventor: XU, Shengfeng, Shenzhen, Guangdong 518129 (CN); HUANG, Su, Shenzhen, Guangdong 518129 (CN); LI, Meng, Shenzhen, Guangdong 518129 (CN); GUO, Yinghao, Shenzhen, Guangdong 518129 (CN)
(74) Representative: MERH-IP Matias Erny Reichl Hoffmann Patentanwälte PartG mbB
(86) International application number: PCT/CN2024/083474
(87) International publication number: WO 2024/208001

(57) **Abstract**

Embodiments of this application provide a communication method and a communication apparatus. The communication method includes: A first terminal obtains information about one or more candidate located UEs; and the first terminal determines, from the one or more candidate located UEs based on the information about the one or more candidate located UEs, a located UE used to assist in positioning the first terminal. Therefore, the located UE used to assist in positioning can be more properly selected based on various information about the candidate located UE.

## Description

This application claims priority to Chinese Patent Application No. 202310384506.6, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a communication method and a communication apparatus.

### BACKGROUND

With the rapid development of mobile communication, numerous application scenarios such as internet of vehicles, autonomous driving, and uncrewed aerial vehicles raise higher requirements on positioning capabilities. Therefore, it is necessary to enhance network positioning technologies to improve positioning accuracy. At present, the location service (location service, LCS) technology is typically used to determine an actual geographical location of a terminal device (user equipment, UE) through cooperation between a wireless terminal and a wireless network, to provide a service offering user-desired location-related information. For example, a network may adopt a combined approach of sidelink (sidelink) positioning and Uu positioning, a target UE and a located UE (assisted UE) (also known as a positioning located UE) perform sidelink positioning, and the target UE is positioned based on an absolute location of the located UE. For the foregoing terminal positioning method, how to properly select the located UE is crucial to improving accuracy of positioning the target UE.

### SUMMARY

Embodiments of this application provide a communication method, to properly select a located UE for assisted positioning based on various information about candidate located UE.

According to a first aspect, a communication method is provided. The method may be performed by a first terminal, or may be performed by a component (for example, a chip or a circuit) of the first terminal. This is not limited. For ease of description, the following uses an example in which the method is performed by the first terminal for description.

The method may include: The first terminal obtains information about one or more candidate located UEs; and the first terminal determines, from the one or more candidate located UEs based on the information about the one or more candidate located UEs, a located UE used to assist in positioning the first terminal, where the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between the first terminal and the candidate located UE, and the sidelink positioning capability information indicates a sidelink positioning method supported by the candidate located UE.

In the foregoing solution, the first terminal can more properly select, based on the various obtained information about the candidate located UE, the located UE used to assist in positioning.

In a possible implementation, that the first terminal determines, from the one or more candidate located UEs based on the information about the one or more candidate located UEs, the located UE used to assist in positioning the first terminal includes: The first terminal determines the located UE from the one or more candidate located UEs based on the location information; or the first terminal determines the located UE from the one or more candidate located UEs based on the mobility status; or the first terminal determines the located UE from the one or more candidate located UEs based on the line of sight information.

In the foregoing solution, the first terminal can specifically determine the located UE based on the location information, the mobility status, the line of sight information, and the like of the candidate located UE, to more properly select the located UE, thereby better meeting accuracy of positioning target UE.

In a possible implementation, the method further includes: The first terminal obtains first information; and that the first terminal determines, from the one or more candidate located UEs based on the information about the one or more candidate located UEs, the located UE used to assist in positioning the first terminal includes: The first terminal determines the located UE from the one or more candidate located UEs based on the information about the one or more candidate located UEs and the first information, where the first information includes a number of needed located UEs and/or a public land mobile network PLMN identifier, and the PLMN identifier is a serving network identifier corresponding to a located UE that is allowed to be used by the first terminal.

In the foregoing solution, the first terminal can more properly select, based on the various obtained information about the candidate located UE and information such as the number of needed located UEs and the PLMN identifier from a network, the located UE under network control or assistance.

In a possible implementation, the method further includes: The first terminal receives second information from a location management network element, where the second information includes at least one of the following: a target area, a number of needed located UEs, a location accuracy requirement of the located UE, and located UE selection indication information; and that the first terminal determines, from the one or more candidate located UEs based on the information about the one or more candidate located UEs, the located UE used to assist in positioning the first terminal includes: The first terminal determines the located UE from the one or more candidate located UEs based on the information about the one or more candidate located UEs and the second information.

In the foregoing solution, the first terminal can more properly select, based on the various obtained information about the candidate located UE, and information such as the target area from the location management network element, the number of needed located UEs, the location accuracy requirement of the located UE, the located UE selection indication information, the located UE under network control or assistance.

In a possible implementation, when the second information is the located UE selection indication information, that the first terminal determines, from the one or more candidate located UEs based on the information about the one or more candidate located UEs, the located UE used to assist in positioning the first terminal includes: When the located UE selection indication information indicates that the first terminal selects a located UE, the first terminal determines the located UE from the one or more candidate located UEs based on the information about the one or more candidate located UEs.

It should be understood that, that the located UE selection indication information indicates that the first terminal selects the located UE may be that the located UE selection indication information indicates that the first terminal selects a terminal whose terminal type is located UE, and the located UE is used to assist in positioning. For example, the located UE selection indication information indicates that the first terminal selects a located UE used to assist in positioning the first terminal. Alternatively, the located UE selection indication information indicates that the first terminal selects a located UE used to assist in positioning the first terminal.

In the foregoing solution, when the first terminal receives only the located UE selection indication information from the location management network element, the first terminal determines the located UE based on the various obtained information about the candidate located UE, thereby increasing management and control of selecting the located UE by the network.

In a possible implementation, when the second information includes the located UE selection indication information, and at least one of the target area, the number of needed located UEs, and the location accuracy requirement of the located UE, that the first terminal determines, from the one or more candidate located UEs based on the information about the one or more candidate located UEs, the located UE used to assist in positioning the first terminal includes: When the located UE selection indication information indicates that the first terminal selects a located UE, the first terminal determines the located UE from the one or more candidate located UEs based on the information about the one or more candidate located UEs and the second information.

In the foregoing solution, when the first terminal receives information such as the located UE selection indication information and the target area from the location management network element, the first terminal can determine the located UE based on the various obtained information about the candidate located UE and information such as the target area, thereby increasing management and control of selecting the located UE by the network.

In a possible implementation, the method further includes: The first terminal sends identification information of the located UE to the location management network element.

In the foregoing solution, after determining the located UE, the first terminal sends the identification information of the located UE to the location management network element, so that the location management network element learns of the located UE that assists in positioning, and then calculates a location of the first terminal based on a location of the located UE.

In a possible implementation, the method further includes: The first terminal receives identification information of multiple terminals from the location management network element; and that the first terminal obtains the information about the one or more candidate located UEs includes: The first terminal obtains the information about the one or more candidate located UEs based on the identification information of the multiple terminals, where the multiple terminals include the one or more candidate located UEs.

In the foregoing solution, the first terminal can obtain the information about the candidate located UE in the multiple terminals based on identifiers of the multiple terminals from the location management network element, or in other words, the first terminal determines the candidate located UE in the multiple terminals. In this way, a range in which the first terminal determines the candidate located UE is narrowed, and overheads of the first terminal can be reduced.

In a possible implementation, that the first terminal obtains the information about the one or more candidate located UEs includes: The first terminal sends a discovery message, where the discovery message is used to discover the candidate located UE; the first terminal receives one or more response messages from the one or more candidate located UEs; and the first terminal obtains the information about the one or more candidate located UEs based on the one or more response messages.

In the foregoing solution, the first terminal obtains the information about the candidate located UE by actively sending the discovery message, thereby increasing diversity for the first terminal to obtain the information about the candidate located UE.

In a possible implementation, the discovery message includes the identification information of the multiple terminals, the multiple terminals include the one or more candidate located UEs, and the response message includes the information about the candidate located UE.

In the foregoing solution, the first terminal includes the identification information of the multiple terminals in the discovery message, so that the candidate located UE determines, based on the identification information of the multiple terminals, whether to return the response message to the first terminal.

In a possible implementation, the discovery message includes a terminal type and/or the PLMN identifier, and the terminal type is located UE.

In the foregoing solution, the first terminal includes the terminal type and/or the PLMN identifier in the discovery message, so that the candidate located UE determines, based on the terminal type and/or the PLMN identifier, whether to return the response message to the first terminal.

In a possible implementation, the response message includes the information about the candidate located UE.

In a possible implementation, that the first terminal obtains the information about the one or more candidate located UEs includes: The first terminal receives one or more announcement messages from the one or more candidate located UEs, where the announcement message is used to broadcast that the candidate located UE is capable of serving as the located UE; and the first terminal obtains the information about the one or more candidate located UEs based on the one or more announcement messages.

In the foregoing solution, the first terminal can obtain the information about the candidate located UE based on the announcement message actively sent (for example, periodically sent) by the candidate located UE, thereby increasing diversity for the first terminal to obtain the information about the candidate located UE.

In a possible implementation, the announcement message includes the information about the candidate located UE.

According to a second aspect, a communication method is provided. The method may be performed by a candidate located UE, or may be performed by a component (for example, a chip or a circuit) of the candidate located UE. This is not limited. For ease of description, the following uses an example in which the method is performed by the candidate located UE for description.

The method may include: The candidate located UE determines that the candidate located UE is authorized to be a located UE for assisted positioning; and the candidate located UE sends information about the candidate located UE, where the information about the candidate located UE is used for selection of the located UE, and the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between a first terminal and the candidate located UE, and the sidelink positioning capability information indicates a sidelink positioning method supported by the candidate located UE.

In the foregoing solution, when determining that the candidate located UE is authorized to be the located UE, the candidate located UE can send the various information about the candidate located UE to the first terminal, so that the first terminal more properly selects, based on the various information about the candidate located UE, the located UE used to assist in positioning.

In a possible implementation, that the candidate located UE sends the information about the candidate located UE includes: When the candidate located UE is in a stationary state or a stable state or a non-moving state, the candidate located UE sends the information about the candidate located UE; or when the location accuracy of the candidate located UE is greater than a first threshold, the candidate located UE sends the information about the candidate located UE.

In the foregoing solution, when the candidate located UE is stationary or a location of the candidate located UE is accurate, the candidate located UE sends the information about the candidate located UE to the first terminal. In this case, the candidate located UE helps improve accuracy of positioning the first terminal.

In a possible implementation, that the candidate located UE sends the information about the candidate located UE includes: The candidate located UE receives a discovery message from the first terminal, where the discovery message is used to discover the candidate located UE; and the candidate located UE sends a response message to the first terminal based on the discovery message, where the response message includes the information about the candidate located UE.

In the foregoing solution, the candidate located UE determines, based on the discovery message of the first terminal, whether to respond to the first terminal, and sends the information about the candidate located UE using the response message, thereby increasing diversity of a solution in which the candidate located UE sends the information about the candidate located UE.

In a possible implementation, the discovery message includes identification information of multiple terminals; and that the candidate located UE sends the response message to the first terminal based on the discovery message includes: When the candidate located UE determines that the identification information of the multiple terminals includes the candidate located UE, the candidate located UE sends the response message to the first terminal.

In the foregoing solution, the candidate located UE can determine, based on the identification information of the multiple terminals carried in the discovery message, whether to respond to the first terminal, to reduce a range of the candidate located UE, and send the information about the candidate located UE using the response message, thereby increasing diversity of a solution in which the candidate located UE sends the information about the candidate located UE.

In a possible implementation, the discovery message includes a terminal type and/or a PLMN identifier, and the terminal type is located UE.

In the foregoing solution, the candidate located UE can determine, based on the terminal type and/or the PLMN identifier carried in the discovery message, whether to respond to the first terminal, to send the information about the candidate located UE, thereby increasing diversity of a solution in which the candidate located UE sends the information about the candidate located UE.

In a possible implementation, that the candidate located UE sends the information about the candidate located UE includes: The candidate located UE sends an announcement message to the first terminal, where the announcement message is used to broadcast that the candidate located UE is capable of serving as the located UE, and the announcement message includes the information about the candidate located UE.

In the foregoing solution, the candidate located UE can actively send (for example, periodically send) the announcement message, to send the information about the candidate located UE, thereby increasing diversity of a solution in which the candidate located UE sends the information about the candidate located UE.

According to a third aspect, a communication method is provided. The method may be performed by a location management network element, or may be performed by a component (for example, a chip or a circuit) of the location management network element. This is not limited. For ease of description, the following uses an example in which the method is performed by the location management network element for description.

The method may include: The location management network element determines that a located UE is needed for positioning of a first terminal, where the located UE is configured to assist in positioning the first terminal; and the location management network element sends second information to the first terminal, where the second information is used by the first terminal to determine the located UE, and the second information includes at least one of the following: a target area, a number of needed located UEs, a location accuracy requirement of the located UE, and located UE selection indication information.

In the foregoing solution, when determining that the located UE is needed for positioning of the first terminal, the location management network element can send information such as the target area and the number of needed located UEs to the first terminal, so that the first terminal more properly selects, based on the various information, the located UE used to assist in positioning under network control or assistance.

In a possible implementation, when the located UE selection indication information indicates that the first terminal selects the located UE, the method further includes: The location management network element receives identification information of the located UE from the first terminal.

In the foregoing solution, after determining the located UE, the first terminal sends the identification information of the located UE to the location management network element, so that the location management network element learns of the located UE that assists in positioning, and then calculates a location of the first terminal based on a location of the located UE.

In a possible implementation, the method further includes: The location management network element sends identification information of multiple terminals to the first terminal, where identifiers of the multiple terminals are used by the first terminal to obtain information about one or more candidate located UEs, and the multiple terminals include the one or more candidate located UEs.

In the foregoing solution, the location management network element sends the identifiers of the multiple terminals to the first terminal, so that the first terminal obtains the information about the candidate located UE in the multiple terminals, or in other words, the first terminal determines the candidate located UE in the multiple terminals. In this way, a range in which the first terminal determines the candidate located UE is narrowed, and overheads of the first terminal can be reduced.

In a possible implementation, the method further includes: The location management network element determines the identification information of the multiple terminals based on location information of the multiple terminals and location information of the first terminal; or the location management network element determines the identification information of the multiple terminals based on a sidelink positioning capability of the first terminal and sidelink positioning capabilities of the multiple terminals.

In a possible implementation, the method further includes: The location management network element sends first request information to a positioning located UE management network element, where the first request information is used to request to obtain the identification information of the multiple terminals, and the first request information includes the target area or the location information of the first terminal, and the location management network element receives the identification information of the multiple terminals from the positioning located UE management network element; or the location management network element sends second request information to an NWDAF, where the second request information is used to request to obtain the identification information of the multiple terminals, and the second request information includes the target area or the location information of the first terminal, and the location management network element receives the identification information of the multiple terminals from the NWDAF.

In a possible implementation, the method further includes: The location management network element determines the second information.

In a possible implementation, when the second information includes the target area, that the location management network element determines the second information includes: The location management network element determines the target area based on location information of a base station corresponding to a measured cell; or the location management network element determines a location of the first terminal based on location information of a base station corresponding to a measured cell and positioning measurement data, and determines the target area based on the location of the first terminal; or the location management network element obtains the target area from the network data analysis function NWDAF.

In a possible implementation, when the second information includes the number of needed located UEs, that the location management network element determines the second information includes: The location management network element determines the number of needed located UEs based on a location accuracy requirement of the first terminal or subscription information of the first terminal; or the location management network element determines the number of needed located UEs based on a location accuracy requirement of the first terminal and a correspondence between the location accuracy requirement of the first terminal and the number of located UEs.

In a possible implementation, when the second information includes the location accuracy requirement of the located UE, that the location management network element determines the second information includes: The location management network element determines the location accuracy requirement of the located UE based on a positioning accuracy requirement of the first terminal.

According to a fourth aspect, a communication method is provided. The method may be performed by a control network element, or may be performed by a component (for example, a chip or a circuit) of the control network element. This is not limited. For ease of description, the following uses an example in which the method is performed by the control network element for description.

The method may include: A location management network element obtains information about one or more candidate located UEs; and the location management network element determines, from the one or more candidate located UEs based on the information about the one or more candidate located UEs, a located UE used to assist in positioning a first terminal, where the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between the first terminal and the candidate located UE, and the sidelink positioning capability information indicates a sidelink positioning method supported by the candidate located UE.

In the foregoing solution, the location management network element can more properly select, based on the various obtained information about the candidate located UE, the located UE used to assist in positioning.

In a possible implementation, that the location management network element obtains the information about the one or more candidate located UEs includes: The location management network element receives the information about the one or more candidate located UEs from the first terminal.

In a possible implementation, before the location management network element obtains the information about the one or more candidate located UEs, the method further includes: The location management network element determines that assistance of a terminal is needed for positioning of the first terminal; and the location management network element sends located UE selection indication information to the first terminal, where the located UE selection indication information indicates that the location management network element selects the located UE.

It should be understood that, that the located UE selection indication information indicates that the location management network element selects the located UE may be that the located UE selection indication information indicates that the location management network element selects a terminal whose terminal type is located UE, and the located UE is used to assist in positioning. For example, the located UE selection indication information indicates that the location management network element selects a located UE used to assist in positioning the first terminal. Alternatively, the located UE selection indication information indicates that the location management network element selects a located UE used to assist in positioning the first terminal.

In the foregoing solution, when determining that assistance of the terminal is needed for positioning of the first terminal, the location management network element indicates, based on the located UE selection indication information, the first terminal to select the located UE by the location management network element, and triggers the first terminal to discover the candidate located UE.

In a possible implementation, the method further includes: The location management network element determines second information, and that the location management network element determines, from the one or more candidate located UEs based on the information about the one or more candidate located UEs, the located UE used to assist in positioning the first terminal includes: The location management network element determines the located UE from the one or more candidate located UEs based on the information about the one or more candidate located UEs and the second information, where the second information includes at least one of the following: a target area, a number of needed located UEs, a location accuracy requirement of the located UE, and located UE selection indication information.

In the foregoing solution, the location management network element can more properly select the located UE based on the various obtained information about the candidate located UE, and the various information such as the determined target area and the determined number of needed located UEs.

In a possible implementation, that the location management network element determines the located UE from the one or more candidate located UEs based on the information about the one or more candidate located UEs and the second information includes: The location management network element determines the located UE based on the location information and location information of the first terminal; or the location management network element determines the located UE based on the mobility status; or the location management network element determines the located UE based on the line of sight information; or the location management network element learns the located UE from an NWDAF; or the location management network element determines the located UE based on a serving network identifier of the first terminal and the serving network identifier of the candidate located UE; or the location management network element determines the located UE based on the sidelink positioning capability information and the sidelink positioning capability information of the first terminal; or the location management network element determines the located UE based on the period of the ranging reference signal and the period of the ranging reference signal of the first terminal; or the location management network element determines the first located UE based on the information indicating whether sidelink positioning calculation is supported.

In a possible implementation, when the second information includes the target area, that the location management network element determines the second information includes: The location management network element determines the target area based on location information of a base station corresponding to a measured cell; or the location management network element determines a location of the first terminal based on location information of a base station corresponding to a measured cell and positioning measurement data, and determines the target area based on the location of the first terminal; or the location management network element obtains the target area from the network data analysis function NWDAF.

In a possible implementation, when the second information includes the number of needed located UEs, that the location management network element determines the second information includes: The location management network element determines the number of needed located UEs based on a location accuracy requirement of the first terminal or subscription information of the first terminal; or the location management network element determines the number of needed located UEs based on a location accuracy requirement of the first terminal and a correspondence between the location accuracy requirement of the first terminal and the number of located UEs.

In a possible implementation, when the second information includes the location accuracy requirement of the located UE, that the location management network element determines the second information includes: The location management network element determines the location accuracy requirement of the located UE based on a positioning accuracy requirement of the first terminal.

In a possible implementation, the method further includes: The location management network element receives positioning subscription information of the candidate located UE from a unified data management network element; and that the location management network element determines, from the one or more candidate located UEs based on the information about the one or more candidate located UEs, the located UE used to assist in positioning the first terminal includes: The location management network element determines the located UE from the one or more candidate located UEs based on the information about the one or more candidate located UEs and the positioning subscription information of the candidate located UE.

In a possible implementation, the method further includes: The location management network element sends identification information of the located UE to the first terminal.

In the foregoing solution, after determining the located UE, the location management network element sends the identification information of the located UE to the first terminal, so that the first terminal learns of the located UE that assists in positioning, and then calculates the location of the first terminal based on a location of the located UE.

According to a fifth aspect, a communication method is provided. The method may be performed by a first terminal, or may be performed by a component (for example, a chip or a circuit) of the first terminal. This is not limited. For ease of description, the following uses an example in which the method is performed by the first terminal for description.

The method may include: The first terminal receives located UE selection indication information from a location management network element, where the located UE selection indication information indicates that the location management network element selects a located UE, and the located UE is used to assist in positioning the first terminal; the first terminal obtains information about one or more candidate located UEs; and the first terminal sends the information about the one or more candidate located UEs to the location management network element based on the located UE selection indication information, and the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between the first terminal and the candidate located UE, and the sidelink positioning capability information indicates a sidelink positioning method supported by the candidate located UE.

In the foregoing solution, when the first terminal receives the indication information of the location management network element, the first terminal can discover the candidate located UE, and send the obtained information about the candidate located UE to the location management network element, so that the location management network element more properly selects the located UE based on the various information about the candidate located UE.

In a possible implementation, that the first terminal obtains the information about the one or more candidate located UEs includes: The first terminal sends a discovery message, where the discovery message is used to discover the candidate located UE; the first terminal receives one or more response messages from the one or more candidate located UEs; and the first terminal obtains the information about the one or more candidate located UEs based on the one or more response messages.

In the foregoing solution, the first terminal obtains the information about the candidate located UE by actively sending the discovery message, thereby increasing diversity for the first terminal to obtain the information about the candidate located UE.

In a possible implementation, the discovery message includes a terminal type and/or a PLMN identifier, and the terminal type is located UE.

In a possible implementation, the response message includes the information about the candidate located UE.

In a possible implementation, that the first terminal obtains the information about the one or more candidate located UEs includes: The first terminal receives one or more announcement messages from the one or more candidate located UEs, where the announcement message is used to broadcast that the candidate located UE is capable of serving as the located UE; and the first terminal obtains the information about the one or more candidate located UEs based on the one or more announcement messages.

In the foregoing solution, the first terminal can obtain the information about the candidate located UE based on the announcement message actively sent (for example, periodically sent) by the candidate located UE, thereby increasing diversity for the first terminal to obtain the information about the candidate located UE.

In a possible implementation, the announcement message includes the information about the candidate located UE.

According to a sixth aspect, a communication apparatus is provided, including a unit configured to perform the method described in the first aspect. The communication apparatus may be a first terminal, or may be performed by a chip or a circuit disposed in the first terminal. This is not limited in this application.

The communication apparatus includes:
a processing unit, configured to obtain information about one or more candidate located UEs; and the processing unit is further configured to determine, from the one or more candidate located UEs based on the information about the one or more candidate located UEs, a located UE used to assist in positioning the first terminal, where the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between the first terminal and the candidate located UE, and the sidelink positioning capability information indicates a sidelink positioning method supported by the candidate located UE.

In a possible implementation, the processing unit is further configured to determine the located UE from the one or more candidate located UEs based on the location information; or the processing unit is further configured to determine the located UE from the one or more candidate located UEs based on the mobility status; or the processing unit is further configured to determine the located UE from the one or more candidate located UEs based on the line of sight information.

In a possible implementation, the processing unit is further configured to obtain first information; and the processing unit is further configured to determine the located UE from the one or more candidate located UEs based on the information about the one or more candidate located UEs and the first information, where the first information includes a number of needed located UEs and/or a public land mobile network PLMN identifier, and the PLMN identifier is a serving network identifier corresponding to a located UE that is allowed to be used by the first terminal.

In a possible implementation, the transceiver unit is configured to receive second information from the location management network element, where the second information includes at least one of the following: a target area, a number of needed located UEs, a location accuracy requirement of the located UE, and located UE selection indication information; and the processing unit is further configured to determine the located UE from the one or more candidate located UEs based on the information about the one or more candidate located UEs and the second information.

In a possible implementation, when the second information is the located UE selection indication information, and when the located UE selection indication information indicates that the first terminal selects a located UE, the processing unit is further configured to determine the located UE from the one or more candidate located UEs based on the information about the one or more candidate located UEs.

In a possible implementation, when the second information includes the located UE selection indication information, and at least one of the target area, the number of needed located UEs, and the location accuracy requirement of the located UE, and the located UE selection indication information indicates that the first terminal selects a located UE, the processing unit is further configured to determine the located UE from the one or more candidate located UEs based on the information about the one or more candidate located UEs and the second information.

In a possible implementation, the transceiver unit is further configured to send identification information of the located UE to the location management network element.

In a possible implementation, the transceiver unit is further configured to receive identification information of multiple terminals from the location management network element; and the processing unit is further configured to obtain the information about the one or more candidate located UEs based on the identification information of the multiple terminals, where the multiple terminals include the one or more candidate located UEs.

In a possible implementation, the transceiver unit is further configured to send a discovery message, where the discovery message is used to discover the candidate located UE; the transceiver unit is further configured to receive one or more response messages from the one or more candidate located UEs; and the processing unit is further configured to obtain the information about the one or more candidate located UEs based on the one or more response messages.

In a possible implementation, the discovery message includes the identification information of the multiple terminals, the multiple terminals include the one or more candidate located UEs, and the response message includes the information about the candidate located UE.

In a possible implementation, the discovery message includes a terminal type and/or the PLMN identifier, and the terminal type is located UE.

In a possible implementation, the transceiver unit is further configured to receive one or more announcement messages from the one or more candidate located UEs, where the announcement message is used to broadcast that the candidate located UE is capable of serving as the located UE; and the processing unit is further configured to obtain the information about the one or more candidate located UEs based on the one or more announcement messages.

In a possible implementation, the announcement message includes the information about the candidate located UE.

For explanations and beneficial effect of related content of the communication apparatus provided in the sixth aspect, refer to the method described in the first aspect. Details are not described herein again.

According to a seventh aspect, a communication apparatus is provided, including a unit configured to perform the method described in the second aspect. The communication apparatus may be a candidate located UE, or may be performed by a chip or a circuit disposed in the candidate located UE. This is not limited in this application.

The communication apparatus includes:
a processing unit, configured to determine that the candidate located UE is authorized to be a located UE for assisted positioning; and a transceiver unit, configured to send information about the candidate located UE, where the information about the candidate located UE is used for selection of the located UE, and the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between a first terminal and the candidate located UE, and the sidelink positioning capability information indicates a sidelink positioning method supported by the candidate located UE.

In a possible implementation, when the candidate located UE is in a stationary state or a stable state or a non-moving state, the transceiver unit is configured to send the information about the candidate located UE; or when the location accuracy of the candidate located UE is greater than a first threshold, the transceiver unit is configured to send the information about the candidate located UE.

In a possible implementation, the transceiver unit is further configured to receive a discovery message from the first terminal, where the discovery message is used to discover the candidate located UE; and the processing unit is further configured to send a response message to the first terminal based on the discovery message.

In a possible implementation, when the candidate located UE determines that the identification information of the multiple terminals includes the candidate located UE, the transceiver unit is further configured to send a response message to the first terminal, where the response message includes information about the candidate located UE.

In a possible implementation, the discovery message includes a terminal type and/or a PLMN identifier, and the terminal type is located UE.

In a possible implementation, the transceiver unit is further configured to send an announcement message to the first terminal, where the announcement message is used to broadcast that the candidate located UE is capable of serving as the located UE, and the announcement message includes the information about the candidate located UE.

For explanations and beneficial effect of related content of the communication apparatus provided in the seventh aspect, refer to the method described in the second aspect. Details are not described herein again.

According to an eighth aspect, a communication apparatus is provided, including a unit configured to perform the method described in the third aspect. The communication apparatus may be a location management network element, or may be a chip or a circuit disposed in the location management network element. This is not limited in this application.

The communication apparatus includes:
a processing unit, configured to determine that a located UE is needed for positioning of a first terminal, where the located UE is configured to assist in positioning the first terminal; and a transceiver unit, configured to send second information to the first terminal, where the second information is used by the first terminal to determine the located UE, and the second information includes at least one of the following: a target area, a number of needed located UEs, a location accuracy requirement of the located UE, and located UE selection indication information.

In a possible implementation, the transceiver unit is further configured to receive identification information of the located UE from the first terminal.

In a possible implementation, the transceiver unit is further configured to send identification information of multiple terminals to the first terminal, where identifiers of the multiple terminals are used by the first terminal to obtain information about one or more candidate located UEs, and the multiple terminals include the one or more candidate located UEs.

In a possible implementation, the processing unit is further configured to determine the identification information of the multiple terminals based on location information of the multiple terminals and location information of the first terminal; or the processing unit is further configured to determine the identification information of the multiple terminals based on a sidelink positioning capability of the first terminal and sidelink positioning capabilities of the multiple terminals.

In a possible implementation, the transceiver unit is further configured to send first request information to a positioning located UE management network element, where the first request information is used to request to obtain the identification information of the multiple terminals, and the first request information includes the target area or the location information of the first terminal, and the location management network element receives the identification information of the multiple terminals from the positioning located UE management network element; or the transceiver unit is further configured to send second request information to an NWDAF, where the second request information is used to request to obtain the identification information of the multiple terminals, and the second request information includes the target area or the location information of the first terminal, and the location management network element receives the identification information of the multiple terminals from the NWDAF.

In a possible implementation, the processing unit is further configured to determine the second information.

In a possible implementation, when the second information includes the target area, the processing unit is further configured to determine the target area based on location information of a base station corresponding to a measured cell; or the processing unit is further configured to determine a location of the first terminal based on location information of a base station corresponding to a measured cell and positioning measurement data, and determine the target area based on the location of the first terminal; or the transceiver unit is further configured to obtain the target area from the network data analysis function NWDAF.

In a possible implementation, when the second information includes the number of needed located UEs, the processing unit is further configured to determine the number of needed located UEs based on a location accuracy requirement of the first terminal or subscription information of the first terminal; or the processing unit is further configured to determine the number of needed located UEs based on a location accuracy requirement of the first terminal and a correspondence between the location accuracy requirement of the first terminal and the number of located UEs.

In a possible implementation, when the second information includes the location accuracy requirement of the located UE, the processing unit is further configured to determine the location accuracy requirement of the located UE based on a positioning accuracy requirement of the first terminal.

For explanations and beneficial effect of related content of the communication apparatus provided in the eighth aspect, refer to the method described in the third aspect. Details are not described herein again.

According to a ninth aspect, a communication apparatus is provided, including a unit configured to perform the method described in the fourth aspect. The communication apparatus may be a location management network element, or may be a chip or a circuit disposed in the location management network element. This is not limited in this application.

The communication apparatus includes:
a processing unit, configured to obtain information about one or more candidate located UEs; and the processing unit is further configured to determine, from the one or more candidate located UEs based on the information about the one or more candidate located UEs, a located UE used to assist in positioning the first terminal, where the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between the first terminal and the candidate located UE, and the sidelink positioning capability information indicates a sidelink positioning method supported by the candidate located UE.

In a possible implementation, the transceiver unit is further configured to receive the information about the one or more candidate located UEs from the first terminal.

In a possible implementation, the processing unit is further configured to determine that assistance of a terminal is needed for positioning of the first terminal; and the transceiver unit is further configured to send located UE selection indication information to the first terminal, where the located UE selection indication information indicates that the location management network element selects the located UE.

In a possible implementation, the processing unit is further configured to determine second information; and the processing unit is further configured to determine the located UE from the one or more candidate located UEs based on the information about the one or more candidate located UEs and the second information, where the second information includes at least one of the following: a target area, a number of needed located UEs, a location accuracy requirement of the located UE, and located UE selection indication information.

In a possible implementation, the processing unit is further configured to determine the located UE based on the location information and location information of the first terminal; or the processing unit is further configured to determine the located UE based on the mobility status; or the processing unit is further configured to determine the located UE based on the line of sight information; or the processing unit is further configured to learn the located UE from an NWDAF; or the processing unit is further configured to determine the located UE based on a serving network identifier of the first terminal and the serving network identifier of the candidate located UE; or the processing unit is further configured to determine the located UE based on the sidelink positioning capability information and the sidelink positioning capability information of the first terminal; or the processing unit is further configured to determine the located UE based on the period of the ranging reference signal and the period of the ranging reference signal of the first terminal; or the processing unit is further configured to determine the first located UE based on the information indicating whether sidelink positioning calculation is supported

In a possible implementation, when the second information includes the target area, the processing unit is further configured to determine the target area based on location information of a base station corresponding to a measured cell; or the processing unit is further configured to determine a location of the first terminal based on location information of a base station corresponding to a measured cell and positioning measurement data, and determine the target area based on the location of the first terminal; or the transceiver unit is further configured to obtain the target area from the network data analysis function NWDAF.

In a possible implementation, when the second information includes the number of needed located UEs, the processing unit is further configured to determine the number of needed located UEs based on a location accuracy requirement of the first terminal or subscription information of the first terminal; or the processing unit is further configured to determine the number of needed located UEs based on a location accuracy requirement of the first terminal and a correspondence between the location accuracy requirement of the first terminal and the number of located UEs.

In a possible implementation, when the second information includes the location accuracy requirement of the located UE, the processing unit is further configured to determine the location accuracy requirement of the located UE based on a positioning accuracy requirement of the first terminal.

In a possible implementation, the transceiver unit is further configured to receive positioning subscription information of the candidate located UE from a unified data management network element; and the processing unit is further configured to determine the located UE from the one or more candidate located UEs based on the information about the one or more candidate located UEs and the positioning subscription information of the candidate located UE.

In a possible implementation, the transceiver unit is further configured to send identification information of the located UE to the first terminal.

For explanations and beneficial effect of related content of the communication apparatus provided in the ninth aspect, refer to the method described in the fourth aspect. Details are not described herein again.

According to a tenth aspect, a communication apparatus is provided, including a unit configured to perform the method described in the fifth aspect. The communication apparatus may be a first terminal, or may be performed by a chip or a circuit disposed in the first terminal. This is not limited in this application.

The communication apparatus includes:
a transceiver unit, configured to receive located UE selection indication information from a location management network element, where the located UE selection indication information indicates that the location management network element selects a located UE, and the located UE is used to assist in positioning the first terminal; a processing unit, configured to obtain information about one or more candidate located UEs; and the transceiver unit is further configured to send the information about the one or more candidate located UEs to the location management network element based on the located UE selection indication information, and the information about the candidate located UE includes at least one of the following: location information, a mobility status, line of sight information, a serving network identifier of the candidate located UE, sidelink positioning capability information, a period of a ranging reference signal, information indicating whether sidelink positioning calculation is supported, and location accuracy of the candidate located UE, where the location information indicates a location of the candidate located UE, the line of sight information includes information indicating line of sight propagation or non line of sight propagation between the first terminal and the candidate located UE, and the sidelink positioning capability information indicates a sidelink positioning method supported by the candidate located UE.

In a possible implementation, the transceiver unit is further configured to send a discovery message, where the discovery message is used to discover the candidate located UE; the transceiver unit is further configured to receive one or more response messages from the one or more candidate located UEs; and the processing unit is further configured to obtain the information about the one or more candidate located UEs based on the one or more response messages.

In a possible implementation, the discovery message includes a terminal type and/or a PLMN identifier, and the terminal type is located UE.

In a possible implementation, the response message includes the information about the candidate located UE.

In a possible implementation, the transceiver unit is further configured to receive one or more announcement messages from the one or more candidate located UEs, where the announcement message is used to broadcast that the candidate located UE is capable of serving as the located UE; and the processing unit is further configured to obtain the information about the one or more candidate located UEs based on the one or more announcement messages.

In a possible implementation, the announcement message includes the information about the candidate located UE.

For explanations and beneficial effect of related content of the communication apparatus provided in the tenth aspect, refer to the method described in the fifth aspect. Details are not described herein again.

According to an eleventh aspect, a communication apparatus is provided. The apparatus includes: a memory, configured to store a program; and at least one processor, configured to execute the computer program or instructions stored in the memory, to perform the method in any one of the possible implementations of the first aspect to the fifth aspect.

In an implementation, the apparatus is a first terminal.

In another implementation, the apparatus is a chip, a chip system, or a circuit used in a first terminal.

According to a twelfth aspect, this application provides a processor, configured to perform the methods provided in the foregoing aspects.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to a thirteenth aspect, a computer-readable storage medium is provided. The computer-readable storage medium stores program code to be executed by a device, and the program code is for performing the method in any one of the possible implementations of the first aspect to the fifth aspect.

According to a fourteenth aspect, a computer program product including instructions is provided. When the computer program product runs on a computer, the computer is caused to perform the method in any one of the possible implementations of the first aspect to the fifth aspect.

According to a fifteenth aspect, a chip is provided. The chip includes a processor and a communication interface. The processor reads, through the communication interface, instructions stored in a memory, to perform the method in any one of the possible implementations of the first aspect to the fifth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method in any one of the possible implementations of the first aspect to the fifth aspect.

According to a sixteenth aspect, a communication system is provided, including one or more of the foregoing first terminal, candidate located UE, and location management network element.

### BRIEF DESCRIPTION OF DRAWINGS

FIG. 1 is diagram of a network architecture to which embodiments of this application are applicable;
FIG. 2 is a diagram of another network architecture to which embodiments of this application are applicable;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a block diagram of a communication apparatus 800 according to an embodiment of this application;
FIG. 9 is a block diagram of another communication apparatus 900 according to an embodiment of this application; and
FIG. 10 is a diagram of a chip system 1000 according to an embodiment of this application.

### DESCRIPTION OF EMBODIMENTS

The following describes technical solutions of embodiments in this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

First, a network architecture to which this application is applicable is briefly described.

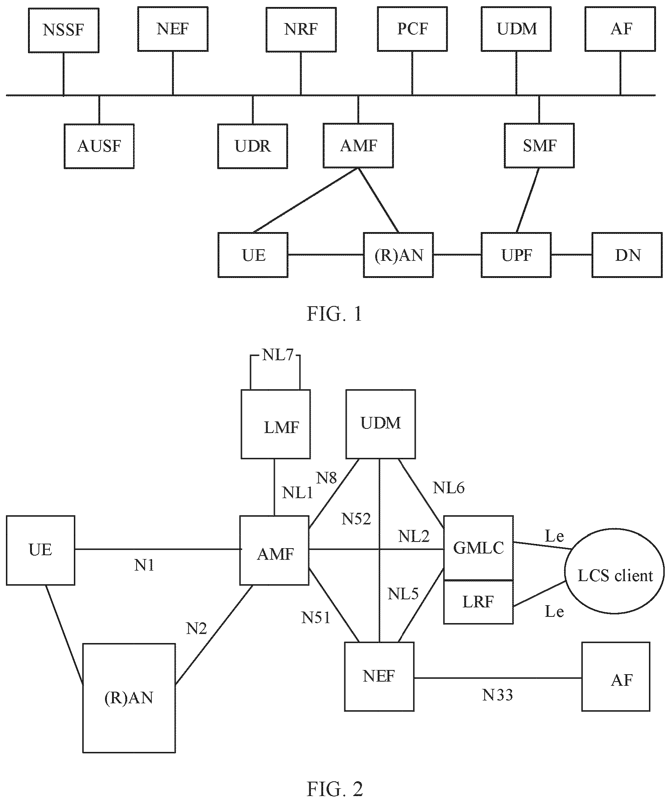

In an example, FIG. 1 is a diagram of a network architecture.

As shown in FIG. 1, a 5G system (the 5th generation system, 5GS) is used as an example of the network architecture. The network architecture may include three parts: a UE part, a data network (data network, DN) part, and an operator network part. An operator network may include one or more of the following network elements: a (radio) access network ((radio) access network, (R)AN) device, a user plane function (user plane function, UPF) network element, an authentication server function (authentication server function, AUSF) network element, a unified data repository (unified data repository, UDR) network element, an access and mobility management function (access and mobility management function, AMF) network element, an SMF network element, a network exposure function (network exposure function, NEF) network element, a network repository function (network repository function, NRF) network element, a policy control function (policy control function, PCF) network element, a unified data management (unified data management, UDM) network element, and an application function (application function, AF) network element. In the foregoing operator network, parts other than the RAN part may be referred to as a core network part. In this application, a user equipment, the (radio) access network device, the UPF network element, the AUSF network element, the UDR network element, the AMF network element, the SMF network element, the NEF network element, the NRF network element, the PCF network element, the UDM network element, and the AF network element are respectively abbreviated as the UE, the (R)AN device, the UPF, the AUSF, the UDR, the AMF, the SMF, the NEF, the NRF, the PCF, the UDM, and the AF.

The following briefly describes each network element related in FIG. 1.

### 1. UE

UE: The UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a user with a voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a wearable device, a terminal device in a 5G network, and a terminal device in a future evolved public land mobile communication network (public land mobile network, PLMN). This is not limited in embodiments of this application.

As an example instead of a limitation, in embodiments of this application, the terminal device may alternatively be a wearable device. The wearable device, also known as a wearable intelligent device, is a general term of wearable devices that are intelligently designed and developed for daily wear by using wearable technologies, for example, glasses, gloves, watches, clothing, and shoes. The wearable devices are portable devices that can be directly worn on the body or integrated into clothes or accessories of users. The wearable devices are not merely hardware devices, but also implement powerful functions with software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. IoT is an important part of future development of information technologies. A main technical feature of the IoT is connecting things to networks by using communication technologies, thereby enabling an intelligent network for human-machine interconnection and inter-object connectivity.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement functions of the terminal device may be a terminal device, or may be an apparatus that can support the terminal device in implementing the functions, for example, a chip system or a chip. The apparatus may be installed in the terminal device. In embodiments of this application, the chip system may include a chip, or may include a chip and another discrete component.

A specific technology used by the UE and a specific device form of the UE are not limited in embodiments of this application.

### 2. (R)AN device

The (R)AN device may provide a function of accessing a communication network for authorized users in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection and interworking performed between the terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding control signals and user data between the terminal device and the core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a base station (base station, BS) in WiMAX, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including multiple antenna panels) of a base station in a 5G system; or may be a network node constituting a gNB or a transmission point, for example, a distributed unit (distributed unit, DU), or a base station in a next-generation 6G communication system.

A specific technology used by the AN device and a specific device form of the AN device are not limited in embodiments of this application.

### 3. User plane function network element

The user plane function network element mainly provides user plane functions such as forwarding and processing of user packets, connection to a data network, session anchor, and quality of service (quality of service, QoS) policy enforcement. For example, the user plane function network element may receive user plane data from the data network, and send the user plane data to a terminal device via an AN device. Alternatively, the user plane function network element may receive user plane data from a terminal device via an AN device, and forward the user plane data to the data network.

In the 5G communication system, the user plane function network element may be a UPF. In a future communication system, the user plane function network element may still be a UPF, or may have another name. This is not limited in this application.

### 4. Data network

The data network is mainly used for an operator network that provides a data service for UE, for example, the internet (Internet), a third-party service network, or an IP multimedia service (IP multimedia service, IMS) network.

In the 5G communication system, the data network element may be a DN. In a future communication system, the data network may still be a DN, or may have another name. This is not limited in this application.

### 5. Authentication service function network element

The authentication service function network element is mainly used for user authentication and the like.

In the 5G communication system, the authentication service function network element may be an AUSF. In a future communication system, the authentication service function network element may still be an AUSF, or may have another name. This is not limited in this application.

### 6. Unified data repository network element

The unified data repository network element mainly provides a capability of storing subscription data, policy data, and capability exposure-related data.

In the 5G communication system, the unified data repository network element may be a UDR. In a future communication system, the unified data repository network element may still be a UDR, or have another name. This is not limited in this application.

### 7. Access management network element

The access management network element is mainly used for functions such as access control, mobility management, and attachment and detachment. The access management network element may further serve as an anchor for connections between N1 signaling (signaling of an N1 interface, which is briefly referred to as N1 signaling) and N2 signaling (signaling of an N2 interface, which is briefly referred to as N2 signaling), and provide routing for N1/N2 session management (session management, SM) messages for a session management network element. The access management network element may further maintain and manage state information of UE.

In the 5G communication system, the access management network element may be an AMF. In a future communication system, the access management network element may still be an AMF, or may have another name. This is not limited in this application.

### 8. Session management function network element

The session management function network element is mainly responsible for session management (such as session establishment, modification, and release), internet protocol (internet protocol, IP) address allocation and management, UPF selection and control, and the like.

In the 5G communication system, the session management function network element may be an SMF. In a future communication system, the session management function network element may still be an SMF, or may have another name. This is not limited in this application.

### 9. Network capability exposure network element

The network capability exposure network element is mainly configured for management and exposure of network data to external applications. The network capability exposure network element can provide corresponding security assurance to ensure security of the external applications accessing a 3GPP network, and provide functions such as exposure of quality of service (quality of service, QoS) customization capabilities for external applications, mobility status event subscription, and AF request distribution.

In the 5G communication system, the network exposure network element may be an NEF. In a future communication system, the network capability exposure network element may still be an NEF, or may have another name. This is not limited in this application.

### 10. Network repository function network element

The network repository function network element is mainly configured for storage of network functional entities, description information of services provided by the network functional entities, and the like.

In the 5G communication system, the network repository function network element may be an NRF. In a future communication system, the network repository function network element may still be an NRF, or may have another name. This is not limited in this application.

### 11. policy control function network element

The policy control function network element is mainly configured for a unified policy framework to govern network behavior, provision of policy rule information to a control plane function network element (for example, the AMF or the SMF), and the like.

In the 5G communication system, the policy control function network element may be a PCF. In a future communication system, the policy control function network element may still be a PCF, or may have another name. This is not limited in this application.

### 12. Unified data management network element

The unified data management network element is mainly configured for UE subscription data management, including UE identification storage and management, UE access authorization, and the like. The data management network element may further configured for generation of 3GPP authentication credentials for UEs. The unified data management network element may be further configured for registration and maintenance of a network element (for example, an AMF denoted by AMF ID 1 is a current serving AMF (serving AMF) of the UE) that currently serves the UE.

In the 5G communication system, the unified data management network element may be a UDM. In a future communication system, the unified data management network element may still be a UDM, or may have another name. This is not limited in this application.

### 13. Application function network element

The application network element is mainly configured for provision of services for a 3GPP network, for example, interacting with a policy control network element to perform policy control, and the like.

In the 5G communication system, the application function network element may be an AF. In a future communication system, the application function network element may still be an AF, or may have another name. This is not limited in this application.

FIG. 2 shows a diagram of another network architecture to which embodiments of this application are applicable.

As shown in FIG. 2, the network architecture may include, for example, but is not limited to, an (R)AN device, an access and mobility management function network element, a network exposure function network element, an application function network element, a location management function (location management function, LMF) network element, a unified data management network element, a gateway mobile location center (gateway mobile location center, GMLC) network element, a location retrieval function (location retrieval function, LRF) network element, and UE.

The following briefly describes some network elements shown in FIG. 2.

### 1. Location management network element

The location management network element is mainly configured to: manage all resources used for UE positioning and calculate a final positioning result and accuracy, is further configured to transmit various UE positioning signaling to an AMF through an NL1 interface, is further configured to: negotiate a positioning capability with UE by using a long-term evolution positioning protocol (long-term evolution presentation protocol, LPP), send assistance data, and request positioning, and is further configured to exchange RAN positioning information with a RAN by using a new radio positioning protocol (new radio positioning protocol a, NRPPa).

In a 5G communication system, the location management network element may be an LMF. In a future communication system, the location management network element may still be an LMF, or may have another name. This is not limited in this application.

### 2. Gateway mobile location center network element

The gateway mobile location center network element sends a location request to an AMF through an NL2 interface, and returns a final positioning result to a positioning center.

In the 5G communication system, the gateway mobile location center network element may be a GMLC. In a future communication system, the gateway mobile location center network element may still be a GMLC, or may have another name. This is not limited in this application.

### 3. Location retrieval function network element

The location retrieval function network element may be configured with a GMLC or configured separately, and is responsible for location information retrieval or verification, and providing routing and related information for UE that has initiated an emergency session.

In the 5G communication system, the location retrieval function network element may be an LRF. In a future communication system, the location retrieval function network element may still be an LRF, or may have another name. This is not limited in this application.

It should be noted that, for the network elements such as the (R)AN device, the access and mobility management function network element, the network exposure function network element, and the application function network element in FIG. 2, refer to the descriptions in FIG. 1. Details are not described herein again.

In the network architectures shown in FIG. 1 and FIG. 2, the network elements may communicate with each other through interfaces. The interfaces between the network elements may be point-to-point interfaces, or may be service-based interfaces. This is not limited in this application. It should be further understood that, names of interfaces between the network elements in FIG. 1 or FIG. 2 are merely examples. During specific implementation, the names of the interfaces may be other names. This is not specifically limited in this application. In addition, names of messages (or signaling) transmitted between the foregoing network elements are also merely examples, and do not constitute any limitation on functions of the messages.

It should be understood that the network architectures shown in FIG. 1 and FIG. 2 are merely examples for description, and a network architecture to which embodiments of this application are applicable is not limited thereto. Embodiments of this application are applicable to any network architecture that can implement functions of the foregoing network elements.

It should be further understood that the functions or the network elements such as the AMF, the SMF, the UPF, the PCF, the UDM, the AUSF, the UDR, the NEF, the NRF, and the AF shown in FIG. 1 and FIG. 2 may be understood as network elements configured to implement different functions, for example, may be combined into network slices as required. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

For ease of understanding of embodiments of this application, terms or technologies in this application are briefly described.

### 1. Location service (location service, LCS)

A location positioning service architecture of a 5G network includes four parts: a terminal device, a radio access network RAN, a core network, and a positioning APP. The core network includes network elements: an AMF, a UDM, a GMLC, and an LMF. The GMLC and the LRF may be deployed together or independently. The GMLC communicates with the AMF through an NL2 interface, and the LMF communicates with the AMF through an NL1 interface. The positioning APP is an external application that triggers a positioning function, that is, an LCS client.

According to different location request initiators, protocol standard positioning services may be classified into three types: mobile originating location request (mobile originating location request, MO-LR), mobile terminating location request (mobile terminating location request, MT-LR), and network induced location request (network induced location request, NI-LR).

### 2. Relative positioning between terminals

A relative location between terminals may be determined through relative positioning. In this method, the terminal needs to have a sidelink (sidelink) positioning capability. The relative positioning may be used to determine a relative distance and/or a relative angle between terminals. Specifically, a relative distance may be obtained through ranging, and a relative angle may be obtained through angle measurement.

For example, a method for ranging between terminals is as follows: An initiating terminal (a terminal A) sends an initial ranging signal, and a responding terminal (a terminal B) sends a feedback ranging signal used for feedback to the initiating terminal after receiving the initial ranging signal. Upon receiving the feedback ranging signal, the initiating terminal calculates a relative distance between the two terminals based on a time difference between sending the initial ranging signal and receiving the feedback ranging signal. Specifically, the ranging method includes single-sided round trip time (single-sided round trip time) and double-sided round trip time (double-sided round trip time).

For example, the method for angle measurement between the terminals includes an angle of arrival (angle of arrival, AoA) method and an angle of departure (angle of departure, AoD) method. An angle of arrival refers to an included angle between a direction in which a receiver of the terminal receives a signal and a reference direction. A relative angle of the terminal B relative to the terminal A may be determined based on an angle of arrival at which a signal sent by the terminal B arrives at the terminal A. An angle of departure refers to an included angle between a direction in which a transmitter of the terminal sends a signal and a reference direction. A relative angle of the terminal B relative to the terminal A may be determined based on an angle of departure at which a signal sent by the terminal A leaves the terminal A.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

The foregoing briefly describes the terms in this application, and details are not described in the following embodiments again. The following describes, in detail with reference to the accompanying drawings, a communication method provided in embodiments of this application. Embodiments provided in this application may be applied to the network architectures shown in FIG. 1 and FIG. 2. This is not limited.

Based on the network architectures shown in FIG. 1 and FIG. 2, for positioning of a terminal device, an actual geographical location of the terminal device is determined through cooperation between a wireless terminal and a wireless network, to provide a service offering user-desired location-related information. For example, a combined approach of sidelink (sidelink) positioning and Uu positioning may be adopted, a target UE and a located UE (assisted UE/located UE) perform sidelink positioning, and the target UE is positioned based on an absolute location of the located UE. It may be understood that the located UE is used to assist in positioning the target UE. When the located UE is needed for positioning of the target UE, how to properly select the located UE is crucial to improving accuracy of positioning the target UE.

This application provides a communication method, to better meet positioning accuracy requirements of target UE by properly selecting a located UE.

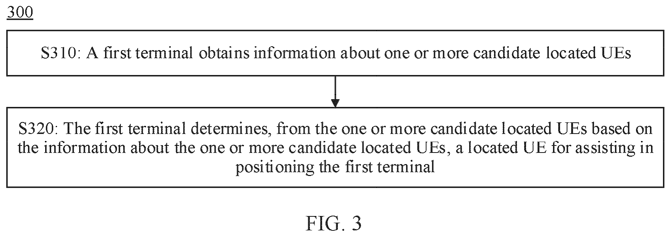

FIG. 3 is a diagram of a communication method 300 according to an embodiment of this application. The method 300 may include the following steps.

S310: A first terminal obtains information about one or more candidate located UEs.

The information about the candidate located UE includes at least one of the following:
location information, a mobility status, line of sight information, a serving network identifier of the candidate located UE, sidelink positioning capability information, a period of a ranging reference signal, information indicating whether sidelink positioning calculation is supported, and location accuracy of the candidate located UE.

Specifically, the location information indicates a location of the candidate located UE. For example, the location information is an absolute location of the candidate located UE.

The mobility status may be that the candidate located UE is in a stationary state, a moving state, a high-speed moving state, a stable state, an unstable state, or the like.

The serving network identifier of the candidate located UE is an identifier of a current serving network of the candidate located UE.

The line of sight information includes information indicating line of sight propagation (line of sight, LOS) or non line of sight propagation (non line of sight, NLOS) between the first terminal and the candidate located UE. The line of sight propagation means that a direct path between the first terminal and the candidate located UE is not blocked by an obstacle, and the non line of sight propagation is that after a direct path between the first terminal and the candidate located UE is blocked by obstacles, a radio wave can reach a receive end only after being reflected and diffracted. In this case, measured data, for example, time of arrival, a time difference, and an incident angle, cannot correctly reflect a real distance between the two terminals.

The sidelink positioning capability information indicates a sidelink positioning method supported by the candidate located UE. For example, the sidelink positioning method supported by the candidate located UE is a ranging method or an angle measurement method.

The period of the ranging reference signal is a period of sending the ranging reference signal by the candidate located device.

Information indicating that sidelink positioning calculation is supported may be understood as that sidelink positioning calculation is supported by the candidate located UE and/or sidelink positioning calculation may be supported by candidate located UE authorized by a network, or may be understood as that the candidate located UE may be used as a sidelink positioning server terminal (sidelink positioning server UE).

The location accuracy of the candidate located UE is a degree of conformity between an obtained location of the candidate located UE and a real location of the candidate located UE. A higher degree of conformity indicates higher location accuracy.

It should be understood that, in this application, the located UE may also be referred to as positioning located UE. This is not limited in this application.

Specifically, the first terminal may obtain the information about the one or more candidate located UEs in the following several manners.

Manner 1: The first terminal sends a discovery message used to discover the candidate located UE, and receives one or more response messages message from the one or more candidate located UEs. Further, the first terminal obtains the information of the one or more candidate located UEs based on the one or more response messages. The method 300 may further include S311 to S313.

S311: The first terminal sends the discovery message.

Correspondingly, the candidate located UE receives the discovery message from the first terminal.

The discovery message is used to discover the candidate located UE. For example, the discovery message may be a solicitation message.

In a possible implementation, the discovery message includes one or more of the following: a terminal type, a serving network (serving PLMN) identifier, and identification information of multiple terminals.

Specifically, the terminal type is located UE, the PLMN identifier is a serving network identifier corresponding to a located UE that is allowed to be used by the first terminal, and the multiple terminals include the one or more candidate located UEs.

S312: The candidate located UE sends the response message to the first terminal based on the discovery message.

Correspondingly, the first terminal receives the response message from the one or more candidate located UEs, where the response message is used to respond to the discovery message.

In a possible implementation, when determining that the candidate located UE is authorized to be a located UE for assisted positioning (for example, learning, based on policy information from a PCF, that the candidate located UE is authorized to be the located UE), the candidate located UE sends the response message to the first terminal.

For example, when determining that the terminal type in the discovery message is the located UE, or determining that a serving network (serving PLMN) identifier of the candidate located UE is the same as a PLMN identifier, or determining that identifiers of the multiple terminals in the discovery message include an identifier of the candidate located UE, the candidate located UE sends the response message to the first terminal.

In a possible implementation, when the candidate located UE is in a stationary state or a stable state or a non-moving state, or when the location accuracy of the candidate located UE is greater than a first threshold, the candidate located UE sends the response message to the first terminal, where the response message includes the information about the candidate located UE. It should be understood that, in this case, when the candidate located UE is stationary or a location of the candidate located UE is accurate, effect of assisting in positioning the first terminal is better, and accuracy is higher.

S313: The first terminal obtains the information about the one or more candidate located UEs based on the one or more response messages.

In a possible implementation, the response message includes the information about the candidate located UE. Specifically, after determining the information about the candidate located UE, the candidate located UE includes the information about the candidate located UE in the response message. When the information about the candidate located UE includes the line of sight information, the candidate located UE may determine the line of sight information based on a feature of a signal that carries the discovery message. For example, if a high-strength signal or a primary path signal is in the signal that carries the discovery message, line of sight propagation is determined; otherwise, non line of sight propagation is determined. When the information about the candidate located UE includes the location accuracy of the candidate located UE, the candidate located UE may initiate a location request to a network, and obtain the location information and the location accuracy from the network.

In a possible implementation, when the information about the candidate located UE includes the line of sight information, the first terminal may determine the line of sight information based on a feature of a signal that carries the response message. For example, if a high-strength signal or a primary path signal is in the signal that carries the response message, line of sight propagation is determined; otherwise, non line of sight propagation is determined.

Manner 2: The first terminal receives an announcement message (announcement message) from the one or more candidate located UEs, where the announcement message is used to broadcast that the candidate located UE is capable of serving as the located UE, and the first terminal obtains the information about the one or more candidate located UEs based on one or more announcement messages. The method 300 may further include S314 and S315.

S314: The candidate located UE sends the announcement message.

Correspondingly, the first terminal receives the announcement message from the candidate located UE.

In a possible implementation, when determining that the candidate located UE is authorized to be a located UE for assisted positioning (for example, learning, based on policy information from a PCF, that the candidate located UE is authorized to be the located UE), the candidate located UE sends the response message to the first terminal.

In a possible implementation, when the candidate located UE is in a stationary state or a stable state or a non-moving state, or when the location accuracy of the candidate located UE is greater than a first threshold, the candidate located UE sends the announcement message.

The announcement message is used to broadcast that the candidate located UE is capable of serving as the located UE.

For example, the candidate located UE periodically sends the announcement message in a broadcast form.

It should be understood that the candidate located UE periodically sends the announcement message, so that efficiency of discovering the candidate located UE by the first terminal can be improved.

S315: The first terminal obtains the information about the one or more candidate located UEs based on the one or more announcement messages.

In a possible implementation, the announcement message includes the information about the candidate located UE. Specifically, after determining the information about the candidate located UE, the candidate located UE includes the information about the candidate located UE in the announcement message.

It should be noted that, when the announcement message includes the information about the candidate located UE, the information about the candidate located UE does not include the line of sight information.

In a possible implementation, when the information about the candidate located UE includes the line of sight information, the first terminal may determine the line of sight information based on a feature of a signal that carries the announcement message. For example, if a high-strength signal or a primary path signal is in the signal that carries the announcement message, line of sight propagation is determined; otherwise, non line of sight propagation is determined.

Manner 3: The first terminal receives the identification information of the multiple terminals from a location management network element, and the first terminal sends a discovery message, where the discovery message includes the identification information of the multiple terminals. After the candidate located UE receives the discovery message, when determining that the identification information of the multiple terminals includes identification information of the candidate located UE, the candidate located UE sends a response message to the first terminal, where the response message carries the information about the candidate located UE. The method 300 may further include S316 to S318.

S316: The location management network element sends the identification information of the multiple terminals to the first terminal.

Correspondingly, the first terminal receives the identification information of the multiple terminals from the location management network element.

In a possible implementation, after determining that located UE is needed for positioning of the first terminal, the location management network element determines the identification information of the multiple terminals, and sends the identification information of the multiple terminals to the first terminal.

For example, the location management network element determines the identification information of the multiple terminals based on location information of the multiple terminals and location information of the first terminal; or the location management network element determines the identification information of the multiple terminals based on a sidelink positioning capability of the first terminal and sidelink positioning capabilities of the multiple terminals; or the location management network element obtains the identification information of the multiple terminals from a positioning located UE management network element or an NWDAF.

S317: The first terminal sends the discovery message.

Correspondingly, the candidate located UE receives the discovery message from the first terminal.

The discovery message is used to discover the candidate located UE.

In a possible implementation, the first terminal sends one discovery message, where the discovery message includes the identification information of the multiple terminals.

In a possible implementation, the first terminal sends multiple discovery messages, and each discovery message includes identification information of one of the multiple terminals.

It should be noted that the foregoing manner in which the first terminal sends the discovery message is merely an example. This is not limited in this application.

S318: The candidate located UE sends the response message to the first terminal based on the discovery message.

Correspondingly, the first terminal receives the response message from the one or more candidate located UEs.

In a possible implementation, when the candidate located UE determines that the identification information of the multiple terminals includes the identification information of the candidate located UE, the candidate located UE sends the response message to the first terminal.

S319: The first terminal obtains the information about the one or more candidate located UEs based on the one or more response messages.

In a possible implementation, the response message includes the information about the candidate located UE.

It should be noted that the manner in which the first terminal obtains the information about the one or more candidate located UEs is merely an example. This is not limited in this application.

Further, the first terminal obtains the information about the candidate located UE, and determines the located UE based on the information about the candidate located UE. The method 300 may further include S320.

S320: The first terminal determines, from the one or more candidate located UEs based on the information about the one or more candidate located UEs, a located UE used to assist in positioning the first terminal. In a possible implementation, the first terminal determines the located UE from the one or more candidate located UEs based on the location information, the mobility status, or the line of sight information in the obtained information about the candidate located UE.

For example, when the first terminal determines the located UE based on the location information of the candidate located UE, selected located UEs need to be distributed around the first terminal, to avoid the multiple selected located UEs being in a same direction or a same area.

For example, when the first terminal determines the located UE based on the mobility status of the candidate located UE, the first terminal preferentially selects a candidate located UE in a stationary state as the located UE.

For example, when the first terminal determines the located UE based on the line of sight information of the candidate located UE, the first terminal preferentially selects a candidate located UE having line of sight measurement with the first terminal as the located UE.

For example, when the first terminal determines the located UE based on the serving network identifier of the candidate located UE, the first terminal selects, as the located UE, a candidate located UE with a same serving network identifier as that of the first terminal.

In a possible implementation, the first terminal obtains first information from the PCF or locally preconfigures the first information, and determines the located UE from the one or more candidate located UEs based on the information about the one or more candidate located UEs and the first information.

The first information includes a number of needed located UEs and/or the PLMN identifier. For example, the first terminal obtains the first information from the PCF, or the first terminal locally preconfigures the first information.

For example, the first terminal determines the located UE based on the number of needed candidate located UEs in the first information and the obtained information about the one or more candidate located UEs. When the number of needed candidate located UEs included in the first information is 10, if the first terminal obtains information about 15 candidate located UEs in S422 or S424, the first terminal determines 10 candidate located UEs from the 15 candidate located UEs randomly or based on location information, mobility statuses, or line of sight information of the candidate located UEs.

For example, when the first terminal determines the located UE based on the PLMN identifier in the first information and the serving network identifier of the candidate located UE in the obtained information about the candidate located UE, and when the serving network identifier of the candidate located UE is the same as the PLMN identifier in the first information, the first terminal determines that the candidate located UE is the located UE.

In a possible implementation, the first terminal receives second information from the location management network element, and determines the located UE from the one or more candidate located UEs based on the information about the one or more candidate located UEs and the second information.

The second information includes at least one of the following: a target area, a number of needed located UEs, a location accuracy requirement of the located UE, and located UE selection indication information.

For example, when the second information is the located UE selection indication information, and when the located UE selection indication information indicates that the first terminal selects a located UE, the first terminal determines the located UE from the one or more candidate located UEs based on the information about the one or more candidate located UEs.

For example, when the second information includes the located UE selection indication information, and at least one of the target area, the number of needed located UEs, and the location accuracy requirement of the located UE, and when the located UE selection indication information indicates that the first terminal selects a located UE, the first terminal determines the located UE from the one or more candidate located UEs based on the information about the one or more candidate located UEs and the second information.

For example, when the second information includes the target area, and the information about the candidate located UE includes the location information, the first terminal determines the located UE based on the target area and the location information of the candidate located UE, where a location of the determined located UE is in the target area.

For example, when the second information includes the location accuracy requirement of the located UE, and the information about the candidate located UE includes the location accuracy of the candidate located UE, the first terminal determines the located UE based on the location accuracy requirement of the located UE and the location accuracy of the candidate located UE, where location accuracy of the determined located UE meets the location accuracy requirement of the located UE.

It should be understood that, that the located UE selection indication information indicates that the first terminal selects the located UE may be that the located UE selection indication information indicates that the first terminal selects a terminal whose terminal type is located UE, and the located UE is used to assist in positioning. For example, the located UE selection indication information indicates that the first terminal selects a located UE used to assist in positioning the first terminal.

In a possible implementation, after obtaining the information about the one or more candidate located UEs in the manner 3 in S310, the first terminal determines the one or more candidate located UEs as the located UE.

In the foregoing solution, the first terminal can more properly select, based on the various information about the candidate located UE, the located UE used to assist in positioning.

Optionally, for the second information sent by the location management network element to the first terminal in S320, the location management network element further needs to determine specific content of the second information, and the method 300 may further include S330.

S330: The location management network element determines the second information.

In a possible implementation, when the second information includes the target area, the location management network element determines the target area based on location information of a base station corresponding to a measured cell; or the location management network element determines a location of the first terminal based on location information of a base station corresponding to a measured cell and positioning measurement data, and determines the target area based on the location of the first terminal; or the location management network element obtains the target area from the NWDAF.

In a possible implementation, when the second information includes the number of needed located UEs, the location management network element determines the number of needed located UEs based on a location accuracy requirement of the first terminal or subscription information of the first terminal; or the location management network element determines the number of needed located UEs based on a location accuracy requirement of the first terminal and a correspondence between the location accuracy requirement of the first terminal and the number of located UEs.

In a possible implementation, when the second information includes the location accuracy requirement of the located UE, the location management network element determines the location accuracy requirement of the located UE based on a positioning accuracy requirement of the first terminal.

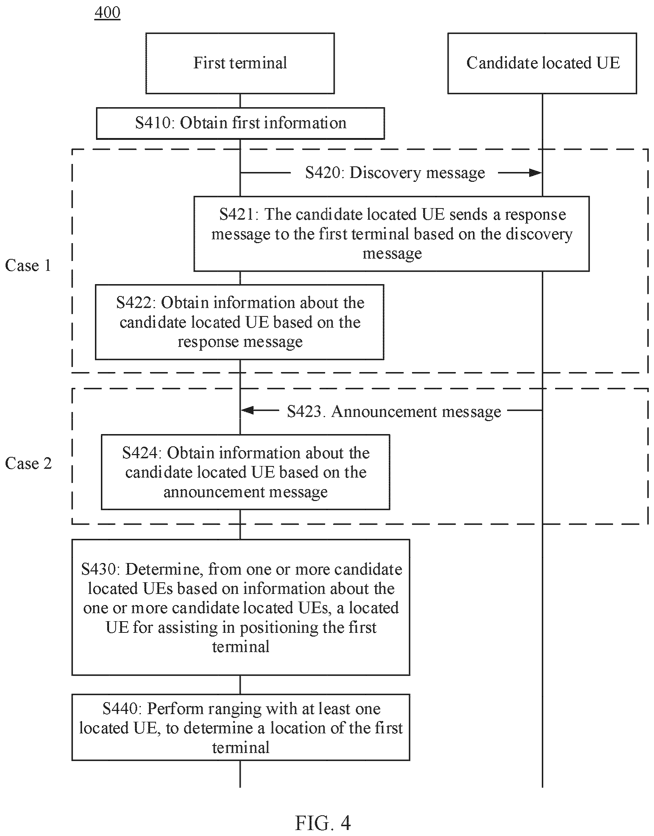

FIG. 4 is a diagram of a communication method 400 according to an embodiment of this application. The method 400 may include the following steps.

S410: A first terminal obtains first information.

Specifically, the first information includes a number of needed located UEs and/or a PLMN identifier.

The number of needed located UEs is a number of located UEs that are used to assist in positioning and that correspond to a ranging service (ranging service), and the PLMN identifier is a serving network identifier corresponding to a located UE that is allowed to be used by the first terminal.

In a possible implementation, the number of needed located UEs includes ranging quality of service (ranging QoS) (for example, ranging accuracy) corresponding to the ranging service, and a correspondence between the number of needed located UEs and the ranging quality of service.

It should be understood that, higher required ranging accuracy indicates a larger number of located UEs that need to participate in positioning.

Optionally, the first information further includes information indicating whether the first terminal is authorized to use the located UE.

In a possible implementation, the first information may be included in ranging policy (ranging policy) information.

For example, the first terminal receives the ranging policy information from a PCF, where the ranging policy information includes the first information.

For example, the first terminal locally configures the ranging policy information, where the ranging policy information includes the first information.

Further, the first terminal needs to discover the located UE that can be used to assist in positioning, and obtain information about the located UE that can be used to assist in positioning.

Specifically, the first terminal obtains information about candidate located UE, and according to different manners in which the first terminal discovers the candidate located UE, the following two cases are specifically:
Case 1: The first terminal actively discovers the candidate located UE, and obtains the information about the candidate located UE.

Case 2: The candidate located UE actively broadcasts information about the candidate located UE, and the first terminal discovers the candidate located UE based on the information reported by the candidate located UE, and obtains the information about the candidate located UE.

It should be noted that the first terminal is target UE that needs to be positioned, and the located UE that can be used to assist in positioning and that is discovered by the first terminal is referred to as the candidate located UE, that is, the candidate located UE is a terminal that can be used to assist in positioning, or a type of the candidate located UE is located UE. It should be understood that, in this application, there may be one or more candidate located UEs discovered by the first terminal. For ease of description, the following uses an example in which the first terminal discovers one candidate located UE for description. For a manner in which the first terminal discovers multiple candidate located UEs, refer to the descriptions of discovering one candidate located UE.

For Case 1: When the first terminal actively discovers the candidate located UE and obtains the information about the candidate located UE, the method 400 further includes S420 to S422.

S420: The first terminal sends a discovery message.

Correspondingly, the candidate located UE receives the discovery message from the first terminal.

The discovery message is used to discover the candidate located UE.

Specifically, the discovery message includes a terminal type, and the terminal type is located UE.

It should be understood that, that the terminal type is the located UE may be understood as that the first terminal needs to discover a device whose type is the located UE, in other words, the first terminal needs to discover a device capable of serving as the located UE or having functions or features of the located UE.

In a possible implementation, the discovery message further includes a PLMN identifier. The PLMN identifier is a serving network (serving PLMN) identifier of the first terminal, or is the PLMN identifier (the serving network identifier corresponding to the located UE that is allowed to be used by the first terminal) included in the first information obtained by the first terminal in S410.

It should be understood that the first terminal sends the discovery message only when the first information obtained by the first terminal in S410 includes information indicating that the located UE is authorized to be used, that is, S420 is performed.

S421: The candidate located UE sends a response message to the first terminal based on the discovery message.

Correspondingly, the first terminal receives the response message from the candidate located UE.

Specifically, when being authorized (for example, authorized by the PCF) to be used as the located UE used to assist in positioning, the candidate located UE sends the response message to the first terminal based on the discovery message.

For example, the PCF sends the ranging policy information to the candidate located UE, where the ranging policy information includes information indicating whether the candidate located UE is authorized to be the located UE. When it is indicated that the candidate located UE is authorized to be the located UE, the candidate located UE sends the response message to the first terminal based on the discovery message.

In a possible implementation, after the candidate located UE receives the discovery message, when the candidate located UE determines that the candidate located UE meets the terminal type included in the discovery message (or the terminal type of the candidate located UE is the located UE), and the candidate located UE is authorized to be the located UE, the candidate located UE sends the response message to the first terminal.

In a possible implementation, if the discovery message received by the candidate located UE includes the PLMN identifier, and when determining that a serving network identifier of the candidate located UE is the same as the PLMN identifier, and the candidate located UE is authorized to be the located UE, the candidate located UE sends the response message to the first terminal.

In a possible implementation, the response message includes the information about the candidate located UE. Specifically, the information about the candidate located UE includes at least one of the following:
location information, a mobility status, line of sight information, a serving network identifier of the candidate located UE, sidelink positioning capability information, a period of a ranging reference signal, information indicating whether sidelink positioning calculation is supported, and location accuracy of the candidate located UE.

It should be noted that, for descriptions of the information about the candidate located UE, refer to the related descriptions of the information about the candidate located UE in S310. To avoid repetition, detailed descriptions thereof are omitted herein.

In a possible implementation, when the candidate located UE is in a stationary state or a stable state or a non-moving state, or when the location accuracy of the candidate located UE is greater than a first threshold, the candidate located UE sends the response message to the first terminal. It should be understood that, in this case, when the candidate located UE is stationary or a location of the candidate located UE is accurate, effect of assisting in positioning the first terminal is better, and accuracy is higher.

S422: The first terminal obtains the information about the candidate located UE based on the response message.

In a possible implementation, the response message includes the information about the candidate located UE. Specifically, after determining the information about the candidate located UE, the candidate located UE includes the information about the candidate located UE in the response message. When the information about the candidate located UE includes the line of sight information, the candidate located UE may determine the line of sight information based on a feature of a signal that carries the discovery message. For example, if a high-strength signal or a primary path signal is in the signal that carries the discovery message, line of sight propagation is determined; otherwise, non line of sight propagation is determined. When the information about the candidate located UE includes the location accuracy of the candidate located UE, the candidate located UE may initiate a location request to a network, and obtain the location information and the location accuracy from the network.

In a possible implementation, when the information about the candidate located UE includes the line of sight information, the first terminal may determine the line of sight information based on a feature of a signal that carries the response message. For example, if a high-strength signal or a primary path signal is in the signal that carries the response message, line of sight propagation is determined; otherwise, non line of sight propagation is determined.

For Case 2: When the candidate located UE actively broadcasts the information about the candidate located UE, and the first terminal discovers the candidate located UE based on the information reported by the candidate located UE, the method 400 further includes S423 and S424.

S423: The candidate located UE sends an announcement message.

Correspondingly, the first terminal receives the announcement message from the candidate located UE.

Specifically, when being authorized (for example, authorized by the PCF) to be the located UE used to assist in positioning, the candidate located UE sends the announcement message to the first terminal.

For example, the PCF sends the ranging policy information to the candidate located UE. The ranging policy information includes information indicating whether the candidate located UE is authorized to be the located UE. When it is indicated that the candidate located UE is authorized to be the located UE, the candidate located UE sends the response message to the first terminal based on the discovery message.

In a possible implementation, the announcement message includes the information about the candidate located UE. For descriptions of the information about the candidate located UE, refer to the related descriptions of the information about the candidate located UE in S310. To avoid repetition, detailed descriptions thereof are omitted herein.

For example, the candidate located UE periodically sends the announcement message in a broadcast form.

It should be understood that the candidate located UE periodically sends the announcement message, so that efficiency of discovering the candidate located UE by the first terminal can be improved.

S424: The first terminal obtains the information about the candidate located UE based on the announcement message.

In a possible implementation, the announcement message includes the information about the candidate located UE. Specifically, after determining the information about the candidate located UE, the candidate located UE includes the information about the candidate located UE in the announcement message.

It should be noted that, when the announcement message includes the information about the candidate located UE, the information about the candidate located UE does not include the line of sight information.

In a possible implementation, when the information about the candidate located UE includes the line of sight information, the first terminal may determine the line of sight information based on a feature of a signal that carries the announcement message. If a high-strength signal or a primary path signal is in the signal that carries the announcement message, line of sight propagation is determined; otherwise, non line of sight propagation is determined.

It should be noted that the manner in which the first terminal obtains the information about the candidate located UE is merely an example. This is not limited in this application.

Further, after obtaining the information about the candidate located UE, the first terminal determines the located UE based on the information about the candidate located UE. The method 400 may further include S430.

S430: The first terminal determines, from one or more candidate located UEs based on information about the one or more candidate located UEs, a located UE used to assist in positioning the first terminal.

In a possible implementation, the first terminal determines the located UE based on the information about the one or more candidate located UEs.

For example, when the information that is about the candidate located UE and that is obtained by the first terminal includes the location information, the first terminal determines the located UE based on the location information in the information about the candidate located UE.

It should be understood that, when the first terminal determines the located UE based on the location information of the candidate located UE, selected located UEs need to be distributed around the first terminal, to avoid the multiple selected located UEs being in a same direction or a same area.

For example, a calculation algorithm is locally configured for the first terminal, and a location of the first terminal and the location information of the candidate located UE are used as inputs of the algorithm, so that the location of the first terminal is located inside a polygon enclosed by the determined located UEs, or the determined candidate located UE maximizes a sum of distance differences; or the first terminal determines, based on location information of the first terminal (for example, a GPS location of the first terminal) and the location information of the candidate located UE, the candidate located UE used to assist in positioning.

For example, when the information that is about the candidate located UE and that is obtained by the first terminal includes the mobility status, the first terminal determines the located UE based on the mobility status of the candidate located UE.

For example, the first terminal preferentially selects a candidate located UE in a stationary state as the located UE.

For example, when the information that is about the candidate located UE and that is obtained by the first terminal includes the line of sight information, the first terminal determines the located UE based on the line of sight information of the candidate located UE.

For example, the first terminal preferentially selects a candidate located UE having line sight measurement with the first terminal as the located UE.

For example, when the information that is about the candidate located UE and that is obtained by the first terminal includes the sidelink positioning capability information, the first terminal determines the located UE based on whether a sidelink positioning method supported by the first terminal is the same as a sidelink positioning method supported by the candidate located UE.

For example, if there is at least one same sidelink positioning method in the sidelink positioning method supported by the first terminal and the sidelink positioning method supported by the candidate located UE, the first terminal determines that the candidate located UE is the located UE; or if all are different, the candidate located UE cannot be selected as the located UE.

For example, when the information that is about the candidate located UE and that is obtained by the first terminal includes the period of sending the ranging reference signal, the first terminal determines the located UE based on a sidelink positioning period of the first terminal and the period of sending the ranging reference signal by the candidate located UE.

For example, when the sidelink positioning period of the first terminal is less than the period of sending the ranging reference signal by the candidate located UE, the candidate located UE cannot meet a sidelink positioning requirement of the first terminal, and the candidate located UE cannot be selected as the located UE.

For example, when the information that is about the candidate located UE and that is obtained by the first terminal includes the information indicating whether sidelink positioning calculation is supported, the first terminal determines the located UE based on whether the candidate located UE supports sidelink positioning calculation.

For example, if the first terminal does not support sidelink positioning calculation, the first terminal may preferentially select candidate located UE that supports sidelink positioning calculation as the located UE, and subsequently send sidelink positioning measurement data to the candidate located UE to perform sidelink positioning calculation; or if the first terminal does not support sidelink positioning calculation, the first terminal selects at least one candidate located UE that supports sidelink positioning calculation as the located UE.

For example, when the information that is about the candidate located UE and that is obtained by the first terminal includes the location accuracy of the candidate located UE, the first terminal determines the located UE based on the location accuracy of the candidate located UE.

For example, the first terminal preferentially selects a candidate located UE with high location accuracy as the located UE, to meet accuracy of obtaining the location of the first terminal.

For example, when the information that is about the candidate located UE and that is obtained by the first terminal includes the serving network identifier of the candidate located UE, the first terminal determines the located UE based on the serving network identifier of the candidate located UE.

For example, the first terminal selects, as the located UE, a candidate located UE with a same serving network identifier as that of the first terminal.

In a possible implementation, the first terminal determines the located UE based on the information about the one or more candidate located UEs and the first information obtained in S410.

For example, when the first information obtained by the first terminal includes the number of needed candidate located UEs, the first terminal determines the located UE based on the number of needed candidate located UEs.

For example, when the number of needed candidate located UEs included in the first information is 10, if the first terminal obtains information about 15 candidate located UEs in S422 or S424, the first terminal determines 10 candidate located UEs from the 15 candidate located UEs randomly or based on location information, mobility statuses, or line of sight information of the candidate located UEs.

For example, the first terminal determines the located UE based on the number of needed candidate located UEs in the first information and one or more of the location information, the mobility status, and the line of sight information in the information about the candidate located UE.

For example, when the first information obtained by the first terminal includes the PLMN identifier, the first terminal determines the located UE based on whether the serving network identifier of the candidate located UE is the same as the PLMN identifier in the first information.

For example, when the serving network identifier of the candidate located UE is the same as the PLMN identifier in the first information, the first terminal determines that the candidate located UE is the located UE.

It should be noted that the manner in which the first terminal determines the located UE from the one or more candidate located UEs based on the information about the one or more candidate located UEs is merely an example. This is not limited in this application.

S440: The first terminal performs ranging with at least one located UE, to determine the location of the first terminal.

Specifically, the first terminal determines the location of the first terminal based on a distance between the first terminal and the at least one located UE and a location of the at least one located UE.

In the foregoing solution, the first terminal more properly selects, based on the various related information about the candidate located UE and information such as the number of needed located UEs and the PLMN identifier from a network, the located UE used to assist in positioning under network control or assistance, thereby improving accuracy of positioning the first terminal.

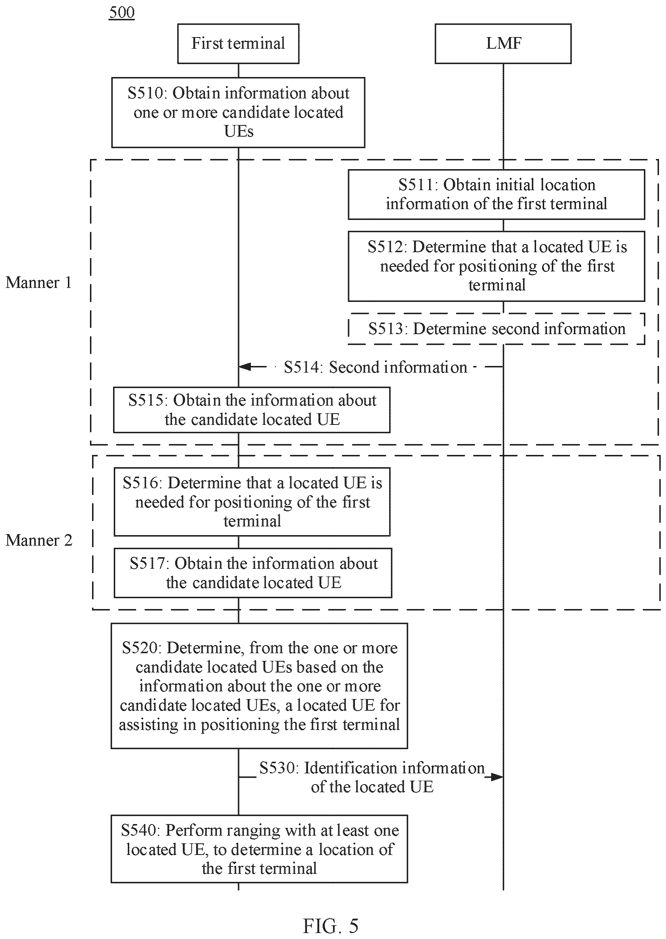

FIG. 5 is a diagram of a communication method 500 according to an embodiment of this application. The method 500 may include the following steps.

S510: A first terminal obtains information about one or more candidate located UEs.

The information about the candidate located UE includes at least one of the following:
location information, a mobility status, line of sight information, a serving network identifier of the candidate located UE, sidelink positioning capability information, a period of a ranging reference signal, information indicating whether sidelink positioning calculation is supported, and location accuracy of the candidate located UE.

It should be noted that, for descriptions of the information about the candidate located UE, refer to the related descriptions of the information about the candidate located UE in S310. To avoid repetition, detailed descriptions thereof are omitted herein.

Specifically, the first terminal may obtain the information about the candidate located UE in the following several manners.

Manner 1: An LMF determines that located UE is needed for positioning of the first terminal, triggers the first terminal to discover the candidate located UE, and obtains the information about the candidate located UE. The method 500 may further include S511 to S513.

S511: The LMF obtains initial location information of the first terminal.

Specifically, the LMF determines the initial location information of the first terminal according to the conventional technology (for example, an MO-LR or an MT-LR).

For example, the LMF obtains positioning measurement data of the first terminal, including a cell identifier ID and a difference between time for receiving reference signals of all cells by the first terminal, or information about signal round-trip time of each cell. The first terminal receives a positioning reference signal of each cell, and then places time information of the reference signal in the positioning measurement data. The LMF calculates a location of the first terminal based on a location of a base station corresponding to the cell identifier ID and information about the difference between the time for receiving the reference signals of all the cells by the first terminal.

S512: The LMF determines that the located UE is needed for positioning of the first terminal.

The located UE is configured to assist in positioning the first terminal.

It should be understood that, that the LMF determines that the located UE is needed for positioning of the first terminal may be further understood as that the LMF determines to position the first terminal in a terminal assistance positioning method.

In a possible implementation, the LMF obtains location estimation accuracy (location estimation accuracy), and determines, based on a difference of the location estimation accuracy, that the located UE is needed for positioning of the first terminal.

For example, because a number of measured cells is insufficient (for example, the first terminal only receives positioning reference signals of two cells), a difference of location estimation accuracy is large, and a positioning accuracy requirement of the first terminal cannot be met. The LMF determines that the located UE is needed for positioning of the first terminal. The LMF determines the location estimation accuracy based on the location measurement data of the first terminal; or the LMF sends the location measurement data of the first terminal to a network data analysis function (network data analytics function, NWDAF), and the NWDAF determines the location estimation accuracy based on the location measurement data of the first terminal, and after determining the location estimation accuracy, sends the determined location estimation accuracy to the LMF. After obtaining the location estimation accuracy, the LMF determines, based on a difference of the location estimation accuracy, that the located UE is needed for positioning of the first terminal.

Optionally, in S513, the LMF determines second information.

It should be understood that after the LMF determines that the located UE is needed for positioning of the first terminal, the LMF determines the second information used to select the located UE.

The second information includes at least one of a target area (target area), located UE selection indication information (assisted UE selection indication), a number of needed located UEs (number of located UE), a location accuracy requirement of the located UE, and identification information of multiple terminals.

The target area is used by the first terminal to select the located UE in the target area.

The located UE selection indication information indicates that the first terminal selects the located UE.

It should be understood that, that the located UE selection indication information indicates that the first terminal selects the located UE may be that the located UE selection indication information indicates that the first terminal selects a terminal whose terminal type is located UE, and the located UE is used to assist in positioning. For example, the located UE selection indication information indicates that the first terminal selects a located UE used to assist in positioning the first terminal.

In a possible implementation, the LMF determines the target area based on a location of a base station corresponding to a measured cell, or determines the target area based on the location that is of the first terminal and that is calculated based on the positioning measurement data.

For example, the LMF determines the target area based on the location of the base station corresponding to the measured cell, where the target area is a circular area with the location of the base station corresponding to the measured cell as a center and a specified value as a radius. For another example, the target area is determined based on the location of the first terminal, where the target area is a circular area with the location of the first terminal as a center and a specified value as a radius.

In a possible implementation, the LMF sends the positioning measurement data of the first terminal to the NWDAF, and the NWDAF determines the target area based on the positioning measurement data of the first terminal, and sends the target area to the LMF. For example, the NWDAF determines the target area based on the location of the base station corresponding to the measured cell, or the NWDAF determines the target area based on the location of the first terminal from the LMF. A manner in which the NWDAF determines the target area is the same as the manner in which the LMF determines the target area.

In a possible implementation, the LMF determines the located UE selection indication information based on a capability of the first terminal and a capability of the LMF, where the located UE selection indication information indicates that the first terminal selects the located UE.

For example, if the capability of the LMF does not support selection of the located UE or the capability of the first terminal supports selection of the located UE, the LMF determines that the first terminal selects the located UE, that is, the LMF determines that the located UE selection indication information indicates that the first terminal selects the located UE.

In a possible implementation, the LMF determines the number of needed located UEs based on a positioning accuracy requirement, subscription information of the first terminal, or the like. The subscription information of the first terminal includes the number of needed located UEs, or the subscription information of the first terminal includes a correspondence between the positioning accuracy requirement and the number of needed located UEs. Specifically, the LMF determines the number of needed located UEs based on the location accuracy requirement of the first terminal and the correspondence between the location accuracy requirement of the first terminal and the number of located UEs. The correspondence between the location accuracy requirement and the number of located UEs is preconfigured in the LMF.

For example, the correspondence between the positioning accuracy requirement and the number of needed located UEs is preconfigured in the LMF. A higher positioning accuracy requirement of the first terminal indicates a larger number of needed located UEs. Alternatively, when the subscription information of the first terminal indicates that a priority or an importance level of the first terminal is higher, a larger number of located UEs are needed by the first terminal.

In a possible implementation, the LMF determines the location accuracy requirement of the located UE based on the positioning accuracy requirement of the first terminal.

For example, a correspondence between the positioning accuracy requirement of the terminal and the location accuracy requirement of the located UE is preconfigured in the LMF. For another example, the location accuracy requirement of the located UE is higher than the positioning accuracy requirement of the first terminal.

In a possible implementation, the LMF determines the identification information of the multiple terminals based on location information of the multiple terminals and location information of the first terminal; or the LMF determines the identification information of the multiple terminals based on a sidelink positioning capability of the first terminal and sidelink positioning capabilities of the multiple terminals.

For example, the LMF selects, based on the location information of the multiple terminals and the location information of the first terminal that are locally preconfigured or stored, multiple terminals located around the first terminal (for example, distributed in a circular area of the first terminal). For another example, the LMF locally preconfigures or stores the sidelink positioning capabilities of the multiple terminals. If there is at least one same sidelink positioning method in a sidelink positioning method supported by the first terminal and a sidelink positioning method supported by a terminal, the LMF determines that the terminal is one of the multiple terminals.

In a possible implementation, the LMF sends request information to a positioning located UE management network element (GMLC, NRF, or UDM) or the NWDAF, to request to obtain the identification information of the multiple terminals, where the request information includes the target area or the location information of the first terminal. After determining the identification information of the multiple terminals, the positioning located UE management network element or the NWDAF sends the identification information to the LMF. The positioning located UE management network element or the NWDAF stores the location information of the terminal, and determines the identification information of the multiple terminals based on the target area and the location information of the terminal, where the multiple terminals are located in the target area.

Optionally, in S514, the LMF sends the second information to the first terminal.

Correspondingly, the first terminal receives the second information from the LMF.

In a possible implementation, the LMF sends a first message to the first terminal, where the first message is used to trigger the first terminal to discover the located UE. Optionally, the first message includes the second information.

S515: The first terminal obtains the information about the candidate located UE.

In a possible implementation, the first terminal receives, from the LMF, the first message used to trigger the first terminal to discover the located UE, and the first terminal discovers the candidate located UE based on the first message, to obtain the information about the candidate located UE.

In a possible implementation, when the second information received by the first terminal from the LMF includes located UE selection indication, and the located UE selection indication indicates that the first terminal selects the located UE, the first terminal discovers the candidate located UE, to obtain the information about the candidate located UE.

In a possible implementation, a system considers by default that the first terminal selects the located UE, and the first terminal discovers the candidate located UE, to obtain the information about the candidate located UE.

It should be noted that, for a specific manner in which the first terminal obtains the information about the candidate located UE, refer to the descriptions of S420 to S422 and S423 and S424. To avoid repetition, detailed descriptions thereof are omitted herein.

Manner 2: The first terminal determines that located UE is needed for positioning of the first terminal, and the first terminal discovers the candidate located UE and obtains the information about the candidate located UE. The method 500 may further include S516 and S517.

S516: The first terminal determines that the located UE is needed for positioning of the first terminal.

For example, the first terminal determines that a number of measured cells is insufficient, and further determines that the located UE is needed for positioning of the first terminal. It should be understood that, when the number of measured cells is insufficient, a location that is of the first terminal and that is obtained based on limited cell measurement information cannot meet positioning accuracy. Therefore, the located UE is needed for positioning of the first terminal.

S517: The first terminal obtains the information about the candidate located UE.

It should be understood that, after the first terminal determines that the located UE is needed for positioning of the first terminal, the first terminal further discovers the candidate located UE, and obtains the information about the candidate located UE.

It should be noted that, for a specific manner in which the first terminal obtains the information about the candidate located UE, refer to the descriptions of S420 to S422 and S423 and S424. To avoid repetition, detailed descriptions thereof are omitted herein.

Further, after obtaining the information about the candidate located UE, the first terminal determines the located UE based on the information about the candidate located UE.

S520: The first terminal determines, from the one or more candidate located UEs based on the information about the one or more candidate located UEs, a located UE used to assist in positioning the first terminal.

In a possible implementation, the first terminal determines the located UE based on the information about the candidate located UE obtained in S510.

In a possible implementation, when the first terminal receives the second information from the LMF in S515, where the second information includes the located UE selection indication, and the located UE selection indication indicates that the first terminal selects the located UE, the first terminal determines the located UE based on the information about the candidate located UE obtained in S510.

It should be noted that, for a manner in which the first terminal determines the located UE based on the obtained information about the candidate located UE, refer to the related descriptions in S430. To avoid repetition, detailed descriptions thereof are omitted herein.

In a possible implementation, when the first terminal receives the second information from the LMF in S515, where the second information includes at least one of the target area, the number of needed located UEs, and the location accuracy requirement of the located UE, the first terminal determines the located UE based on the second information and the information about the candidate located UE.

For example, when the second information includes the target area, and the information about the candidate located UE includes the location information, the first terminal determines the located UE based on the target area and the location information of the candidate located UE, where a location of the determined located UE is in the target area.

For example, when the second information includes the quantity of needed located UEs, the first terminal determines the located UE based on the quantity of needed located UEs and the information about the candidate located UEs, where a quantity of the determined located UEs does not exceed the quantity of needed located UEs. For example, the first terminal first determines the located UE based on the information about the candidate located UE. If a number of determined located UEs is greater than the number of the needed located UEs, the first terminal needs to select, from the determined located UEs, a located UE corresponding to the number of the needed located UEs.

For example, when the second information includes the location accuracy requirement of the located UE, and the information about the candidate located UE includes the location accuracy of the candidate located UE, the first terminal determines the located UE based on the location accuracy requirement of the located UE and the location accuracy of the candidate located UE, where location accuracy of the determined located UE meets the location accuracy requirement of the located UE.

Optionally, in S530, the first terminal sends identification information of the located UE to the LMF.

Correspondingly, the LMF receives the identification information of the located UE from the first terminal.

Specifically, after determining the located UE, the first terminal sends the identification information of the located UE to the LMF, so that the LMF learns the located UE used to assist in positioning the first terminal.

S540: The first terminal performs ranging with at least one located UE, to determine the location of the first terminal.

Specifically, the first terminal determines the location of the first terminal based on a distance between the first terminal and the at least one located UE and a location of the at least one located UE.

In the foregoing solution, the first terminal more properly selects, based on the various related information provided by the LMF such as the target area, the number of needed located UEs, the location accuracy requirement of the located UE, and the located UE selection indication information, and the information about the candidate located UE, the located UE used to assist in positioning under network control or assistance, thereby improving accuracy of positioning the first terminal.

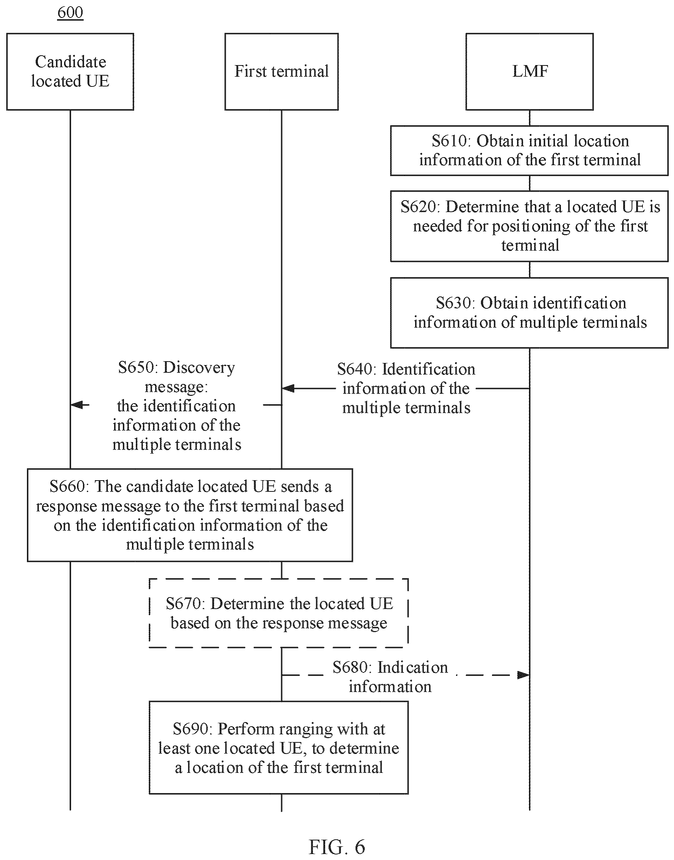

FIG. 6 is a diagram of a communication method 600 according to an embodiment of this application. The method 600 may include the following steps.

S610: An LMF obtains initial location information of a first terminal.

Specifically, the LMF determines the initial location information of the first terminal according to the conventional technology (for example, an MO-LR or an MT-LR).

It should be understood that, for a manner in which the LMF obtains the initial location information of the first terminal in S610, refer to the related descriptions in S511. Details are not described herein again.

S620: The LMF determines that located UE is needed for positioning of the first terminal.

It should be understood that, for a manner in which the LMF determines that the located UE is needed for positioning of the first terminal in S620, refer to the related descriptions in S512. Details are not described herein again.

S630: The LMF obtains identifiers of multiple terminals.

Optionally, the LMF determines, based on a capability of the first terminal and a capability of the LMF, that the LMF needs to obtain the identifiers of the multiple terminals.

The identifiers of the multiple terminals are used by the first terminal to obtain information about one or more candidate located UEs.

In a possible implementation, the LMF determines identification information of the multiple terminals based on location information of the multiple terminals and location information of the first terminal that are locally preconfigured or stored.

For example, the LMF determines the multiple terminals based on the location information of the multiple terminals and a location of a measured cell that are locally preconfigured or stored, so that the multiple terminals and the measured cell are separately around the first terminal, to avoid the multiple terminals being in a same direction or in a same area.

In a possible implementation, the LMF determines the identification information of the multiple terminals based on a sidelink positioning capability of the first terminal and sidelink positioning capabilities of the multiple terminals.

For another example, if there is at least one same sidelink positioning method in a sidelink positioning method supported by the first terminal and a sidelink positioning method supported by a terminal, the LMF determines that the terminal is one of the multiple terminals; or if all are different, the terminal cannot be selected.

It should be understood that the LMF may obtain the sidelink positioning capability of the first terminal from the first terminal, and obtain the sidelink positioning capabilities of the multiple terminals from local storage of the LMF or from a positioning located UE management network element.

In a possible implementation, the LMF sends first request information to the positioning located UE management network element (for example, a GMLC, an NRF, or a UDM), where the first request information is used to request to obtain the identifiers of the multiple terminals, and the first request information includes a target area. The positioning located UE management network element determines the identifiers of the multiple terminals based on the request information and the stored location information of the multiple terminals, and notifies the LMF of the identifiers. The positioning located UE management network element stores the location information of the terminal, and determines the identification information of the multiple terminals based on the target area and the location information of the terminal, where the multiple terminals are located in the target area.

It should be understood that, for a manner in which the LMF obtains the target area, refer to the related descriptions of obtaining the target area in S513. To avoid repetition, detailed descriptions thereof are omitted herein.

In a possible implementation, the LMF sends second request information to the NWDAF, where the second request information is used to request to obtain the identifiers of the multiple terminals, and the second request information includes the positioning measurement data of the first terminal obtained in S610 or S511. The NWDAF determines the identifiers of the multiple terminals based on the positioning measurement data of the first terminal and the stored location information of the multiple terminals (or the location information of the multiple terminals obtained from the positioning located UE management network element or the LMF), and notifies the LMF of the identifiers.

It should be understood that, in a process in which the LMF obtains the identifiers of the multiple terminals in S630, the LMF or the positioning located UE management network element needs to obtain the location information of the multiple terminals. Specifically, the terminal sends indication information of the located UE or the location information of the terminal to the LMF via an AMF. If the LMF receives the indication information of the located UE, after the LMF obtains the location information of the terminal, the LMF stores the location information of the terminal, or sends the location information of the terminal to the positioning located UE management network element.

S640: The LMF sends the identification information of the multiple terminals to the first terminal.

Correspondingly, the first terminal receives the identification information of the multiple terminals from the LMF.

It should be understood that, the multiple terminals may be understood as terminals that are recommended by the LMF to the first terminal and that can be used as located UEs used to assist in positioning the first terminal, or the identification information of the multiple terminals includes identification information of the one or more candidate located UEs, or the identification information of the one or more candidate located UEs is candidate located UEs corresponding to the identification information of the multiple terminals.

S650: The first terminal sends a discovery message.

Correspondingly, the candidate located UE receives the discovery message from the first terminal.

The discovery message is used to discover the candidate located UE.

In a possible implementation, the first terminal sends one discovery message, where the discovery message includes the identification information of the multiple terminals.

In a possible implementation, the first terminal sends multiple discovery messages, and each discovery message includes identification information of one of the multiple terminals.

It should be noted that the foregoing manner in which the first terminal sends the discovery message is merely an example. This is not limited in this application.

S660: The candidate located UE sends a response message to the first terminal based on the identification information of the multiple terminals.

Correspondingly, the first terminal receives the response message from the candidate located UE.

In a possible implementation, after receiving the discovery message from the first terminal, the candidate located UE determines, based on whether identification information of the candidate located UE is one of the identification information of the multiple terminals, whether to send the response message to the first terminal, or determines, based on whether the identification information of the multiple terminals includes identification information about the candidate located UE, whether to send the response message to the first terminal.

For example, when the candidate located UE determines that the identification information of the multiple terminals includes the identification information about the candidate located UE, the candidate located UE sends the response message to the first terminal; or if the identification information of the multiple terminals does not include the identification information about the candidate located UE, the candidate located UE does not send the response message to the first terminal.

In a possible implementation, the response message includes the information about the candidate located UE.

It should be noted that, for descriptions of the information about the candidate located UE, refer to the related descriptions of the information about the candidate located UE in S310. To avoid repetition, detailed descriptions thereof are omitted herein.

Optionally, in S670, the first terminal determines the located UE based on the response message.

Specifically, after receiving the response message from the candidate located UE, the first terminal determines that the candidate located UE is the located UE used to assist in positioning the first terminal.

Optionally, in S680, the first terminal sends indication information to the LMF.

Correspondingly, the LMF receives the indication information from the first terminal.

The indication information indicates identification information of the located UE, or the indication information indicates that the located UE is not found or is not determined.

Optionally, in S690, the first terminal performs ranging with at least one located UE, to determine a location of the first terminal.

In a possible implementation, the first terminal determines the location of the first terminal based on the location information of the candidate located UE in the response message received in S660.

In a possible implementation, when the first terminal performs S670, that is, after the first terminal receives the response message from the candidate located UE in S660, the first terminal determines that the candidate located UE is the located UE used to assist in positioning the first terminal, and further, the first terminal determines the location of the first terminal based on the location information of the located UE.

In the foregoing solution, the LMF determines the multiple terminals that can be used to assist in positioning the first terminal, and notifies the first terminal of the multiple terminals, so that the first terminal more properly selects the located UE from the multiple terminals. This improves accuracy of positioning the first terminal, and can further reduce overheads of the first terminal.

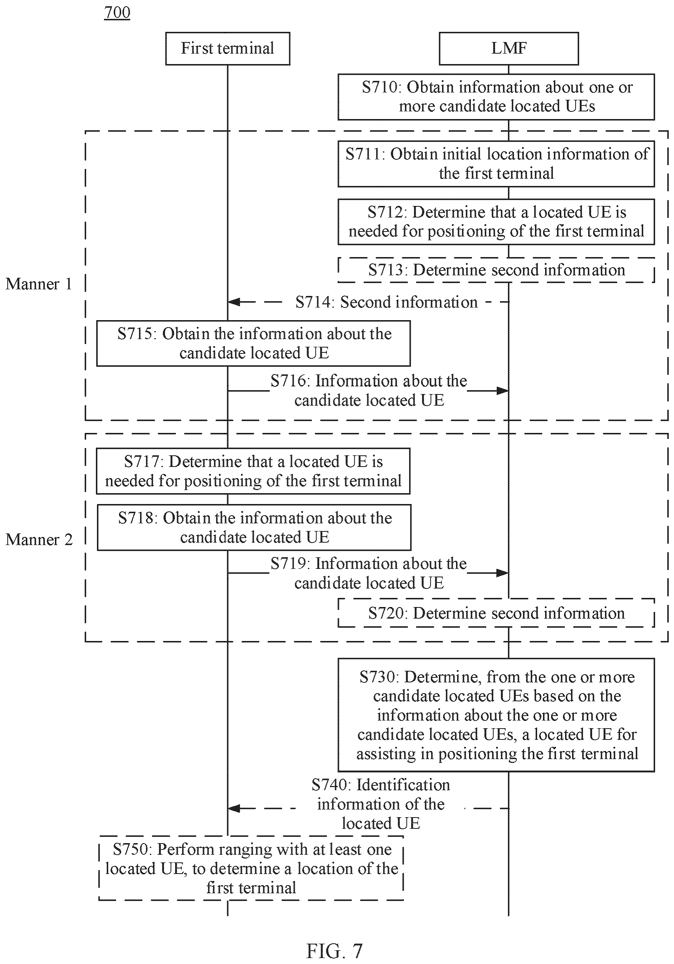

FIG. 7 is a diagram of a communication method 700 according to an embodiment of this application. The method 700 may include the following steps.

S710: An LMF obtains information about one or more candidate located UEs.

The information about the candidate located UE includes at least one of the following:
location information, a mobility status, line of sight information, a serving network identifier of the candidate located UE, sidelink positioning capability information, a period of a ranging reference signal, information indicating whether sidelink positioning calculation is supported, and location accuracy of the candidate located UE.

It should be noted that, for descriptions of the information about the candidate located UE, refer to the related descriptions of the information about the candidate located UE in S310. To avoid repetition, detailed descriptions thereof are omitted herein.

Specifically, the LMF may obtain the information about the candidate located UE in the following several manners.

Manner 1: The LMF determines that a located UE is needed for positioning of a first terminal, triggers the first terminal to discover the candidate located UE, and receives the information about the candidate located UE from the first terminal. The method 700 may further include S711 to S713.

S711: The LMF obtains initial location information of the first terminal.

Specifically, the LMF determines the initial location information of the first terminal according to the conventional technology (for example, an MO-LR or an MT-LR).

It should be noted that, for a manner in which the LMF obtains the initial location information of the first terminal in S711, refer to the related descriptions in S511. Details are not described herein again.

S712: The LMF determines that the located UE is needed for positioning of the first terminal.

It should be noted that, for a manner in which the LMF determines that the located UE is needed for positioning of the first terminal in S712, refer to the related descriptions in S512. Details are not described herein again.

Optionally, in S713, the LMF determines second information.

Specifically, after the LMF determines that the located UE is needed for positioning of the first terminal, the LMF determines the second information used to select the located UE.

The second information includes at least one of a target area, located UE selection indication information, a number of needed located UEs, a location accuracy requirement of the located UE, and identification information of multiple terminals.

The located UE selection indication information indicates that the LMF selects the located UE.

It should be understood that, that the located UE selection indication information indicates that the LMF selects the located UE may be that the located UE selection indication information indicates that the LMF selects a terminal whose terminal type is located UE, and the located UE is used to assist in positioning. For example, the located UE selection indication information indicates that the LMF selects a located UE used to assist in positioning the first terminal.

In a possible implementation, the LMF determines the located UE selection indication information based on a capability of the first terminal and a capability of the LMF, where the located UE selection indication information indicates that the LMF selects the located UE or indicates that a network selects the located UE. For example, if the capability of the LMF supports selection of the located UE or the capability of the first terminal does not support selection of the located UE, the LMF determines that the LMF selects the located UE or the network selects the located UE, that is, the LMF determines that the located UE selection indication information indicates that the LMF selects the located UE or indicates that the network selects the located UE.

It should be noted that, for a process in which the LMF determines the second information, refer to the specific process in which the LMF determines the second information in S513. To avoid repetition, detailed descriptions thereof are omitted herein.

Optionally, in S714, the LMF sends the second information to the first terminal.

Correspondingly, the first terminal receives the second information from the LMF.

It should be noted that, for a process in which the LMF sends the second information to the first terminal, refer to the specific process in which the LMF sends the second information in S514. To avoid repetition, detailed descriptions thereof are omitted herein.

S715: The first terminal obtains the information about the candidate located UE.

In a possible implementation, the first terminal receives, from the LMF, the first message used to trigger the first terminal to discover the located UE, and the first terminal discovers the candidate located UE based on the first message, to obtain the information about the candidate located UE.

In a possible implementation, when the second information received by the first terminal from the LMF includes located UE selection indication, and the located UE selection indication indicates that the LMF selects the located UE, the first terminal discovers the candidate located UE, to obtain the information about the candidate located UE, and then sends the information about the candidate located UE to the LMF, so that the LMF selects the located UE.

It should be noted that, for a specific manner in which the first terminal obtains the information about the candidate located UE, refer to the descriptions of S420 to S422 and S423 and S424. To avoid repetition, detailed descriptions thereof are omitted herein.

S716: The first terminal sends the information about the candidate located UE to the LMF.

Correspondingly, the LMF receives the information about the candidate located UE from the first terminal.

In a possible implementation, when the second information received by the first terminal from the LMF includes located UE selection indication, and the located UE selection indication indicates that the LMF selects the located UE, the first terminal sends the obtained information about the candidate located UE to the LMF.

Manner 2: The first terminal determines that located UE is needed for positioning of the first terminal, and the first terminal sends the information about the candidate located UE to the LMF after discovering the candidate located UE. The method 700 may further include S717 to S719.

S717: The first terminal determines that the located UE is needed for positioning of the first terminal.

For example, the first terminal determines that a number of measured cells is insufficient, and further determines that the located UE is needed for positioning of the first terminal.

S718: The first terminal obtains the information about the candidate located UE.

It should be understood that, after the first terminal determines that the located UE is needed for positioning of the first terminal, the first terminal further discovers the candidate located UE.

It should be noted that, for a specific manner in which the first terminal obtains the information about the candidate located UE, refer to the descriptions of S420 to S422 and S423 and S424. To avoid repetition, detailed descriptions thereof are omitted herein.

S719: The first terminal sends the information about the candidate located UE to the LMF.

Correspondingly, the LMF receives the information about the candidate located UE from the first terminal.

Optionally, in S720, the LMF determines the second information.

It should be understood that, when the LMF receives the information about the candidate located UE from the first terminal in S710, the LMF needs to determine the second information used to select the located UE.

The second information includes at least one of a target area, a number of needed located UEs, a location accuracy requirement of the located UE, and located UE selection indication information.

It should be noted that, for a specific manner in which the LMF determines the second information in S720, refer to the related descriptions in S513. To avoid repetition, detailed descriptions thereof are omitted herein.

Further, after obtaining the information about the candidate located UE, the LMF learns that the located UE needs to be determined, and the method 700 may further include S730.

S730: The LMF determines, from the one or more candidate located UEs based on the information about the candidate located UE, a located UE used to assist in positioning the first terminal.

In a possible implementation, the LMF determines the located UE based on the information about the candidate located UE obtained in S710.

For example, the LMF determines the located UE based on the location information of the candidate located UE.

For example, the LMF determines the located UE based on the location information of the candidate located UE and a location of a measured cell, so that the located UE and the measured cell are separately around the first terminal, to avoid the located UE being in a same direction or in a same area.

For example, the LMF determines the located UE based on the location information of the candidate located UE and the target area, so that the located UE is located in the target area.

For example, the LMF determines the located UE based on the mobility status of the candidate located UE.

For example, the LMF preferentially selects a candidate located UE in a stationary state as the located UE.

For example, the LMF determines the located UE based on the line of sight information of the candidate located UE.

For example, the LMF preferentially selects a candidate located UE having line of sight measurement with the first terminal as the located UE.

For example, the LMF determines the located UE based on positioning subscription information of the candidate located UE.

For example, the LMF preferentially selects an authorized candidate located UE as the located UE.

It should be understood that the LMF may obtain, from a UDM, the positioning subscription information of the candidate located UE to learn whether the candidate located UE is authorized to be the located UE, or the LMF requests, from a UDM, whether the candidate located UE is authorized to be the located UE, or the like. This is not limited in this application.

For example, the LMF sends, to an NWDAF, the positioning measurement data of the first terminal obtained in S711 and the information about the candidate located UE received in S710, and the NWDAF determines the located UE based on the foregoing information, and notifies the LMF of the determined located UE.

For example, if the information about the candidate located UE further includes the serving network identifier of the candidate located UE, the LMF determines the located UE based on whether the serving network identifier of the candidate located UE is the same as a PLMN identifier allowed by the first terminal.

For example, when the serving network identifier of the candidate located UE is the same as the PLMN identifier allowed by the first terminal, the candidate located UE is determined as the located UE; or when the two are different, the candidate located UE cannot be selected as the located UE.

It should be understood that the PLMN identifier allowed by the first terminal indicates candidate located UEs of which PLMNs are allowed to be used by the first terminal to assist in positioning.

For example, if the information about the candidate located UE further includes the sidelink positioning capability information of the candidate located UE and sidelink positioning capability information of the first terminal, the LMF determines the located UE based on the sidelink positioning capability information of the candidate located UE and the sidelink positioning capability information of the first terminal.

For example, if there is at least one same sidelink positioning method in a sidelink positioning method supported by the first terminal and a sidelink positioning method supported by the candidate located UE, the LMF determines that the candidate located UE is the located UE; or if all are different, the candidate located UE cannot be selected as the located UE.

For example, if the information about the candidate located UE further includes the period of sending the ranging reference signal by the candidate located UE, the LMF determines the located UE based on a sidelink positioning period of the first terminal and the period of sending the ranging reference signal by the candidate located UE.

For example, when the sidelink positioning period of the first terminal is less than the period of sending the ranging reference signal by the candidate located UE, the candidate located UE cannot meet a sidelink positioning requirement of the first terminal, and the candidate located UE cannot be selected as the located UE.

For example, if the information about the candidate located UE further includes the information indicating whether sidelink positioning calculation is supported, the LMF determines the located UE based on whether the candidate located UE supports sidelink positioning calculation.

For example, if the first terminal does not support sidelink positioning calculation, the LMF may preferentially select candidate located UE that supports sidelink positioning calculation as the located UE, and subsequently send sidelink positioning measurement data to the candidate located UE to perform sidelink positioning calculation. Alternatively, if the first terminal does not support sidelink positioning calculation, the LMF selects at least one candidate located UE that supports sidelink positioning calculation as the located UE.

It should be noted that, when the first terminal supports sidelink positioning calculation, the first terminal performs sidelink positioning calculation by default.

In a possible implementation, the LMF determines the located UE based on the information about the one or more candidate located UEs and the second information

In a possible implementation, when the second information includes at least one of the target area, the number of needed located UEs, and the location accuracy requirement of the located UE, the LMF determines the located UE based on the second information and the information about the candidate located UE.

For example, when the second information includes the target area, and the information about the candidate located UE includes the location information, the LMF determines the located UE based on the target area and the location information of the candidate located UE, where a location of the determined located UE is in the target area.

For example, when the second information includes the number of needed located UEs, the LMF determines the located UE based on the number of needed located UEs and the information about the candidate located UE. A number of determined located UEs does not exceed the number of needed located UEs. Specifically, the LMF first determines the located UE based on the information about the candidate located UE. If a number of determined located UEs is greater than the number of the needed located UEs, the LMF needs to select, from the determined located UEs, a located UE corresponding to the number of the needed located UEs.

For example, when the second information includes the location accuracy requirement of the located UE, and the information about the candidate located UE includes the location accuracy of the candidate located UE, the LMF determines the located UE based on the location accuracy requirement of the located UE and the location accuracy of the candidate located UE, where location accuracy of the determined located UE meets the location accuracy requirement of the located UE.

It should be noted that the manner in which the LMF determines the located UE from the one or more candidate located UEs based on the information about the one or more candidate located UEs is merely an example. This is not limited in this application.

Optionally, in S740, the LMF sends identification information of the located UE to the first terminal.

Correspondingly, the first terminal receives the identification information of the located UE from the LMF.

Specifically, after determining the located UE, the LMF sends the identification information of the located UE to the first terminal, so that the first terminal learns located UE used for ranging.

Optionally, in S750, the first terminal performs ranging with at least one located UE, to determine a location of the first terminal.

Specifically, the first terminal determines the location of the first terminal based on a distance between the first terminal and the at least one located UE and a location of the at least one located UE.

In the foregoing solution, the LMF can more properly select, based on the various related information that are about the candidate located UE and that are sent by the first terminal, the located UE used to assist in positioning, thereby improving accuracy of positioning the first terminal.

It may be understood that the examples in FIG. 3 to FIG. 7 in embodiments of this application are merely intended to help a person skilled in the art understand embodiments of this application, but are not intended to limit embodiments of this application to specific scenarios in the examples. A person skilled in the art can apparently make various equivalent modifications or changes based on the examples in FIG. 3 to FIG. 7, and such modifications or changes also fall within the scope of this embodiment of this application.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names in embodiments of this application, for example, the first information or the second information, do not limit the protection scope of embodiments of this application.

It may be further understood that, in the foregoing method embodiments, the method and the operation implemented by the first terminal may be implemented by a component (for example, a chip or a circuit) of the first terminal; the method and the operation implemented by the candidate located UE may be implemented by a component (for example, a chip or a circuit) of the candidate located UE; and the method and the operation implemented by the location management network element may be implemented by a component (for example, a chip or a circuit) of the location management network element. This is not limited. In correspondence to the method provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

It should be understood that the first terminal, the candidate located UE, and the location management network element may perform a part or all of the steps in the foregoing embodiments. These steps or operations are merely examples. In embodiments of this application, other operations or variations of various operations may be further performed. In addition, the steps may be performed in another order different from that presented in the foregoing embodiments, and not all the operations in the foregoing embodiments may be performed.

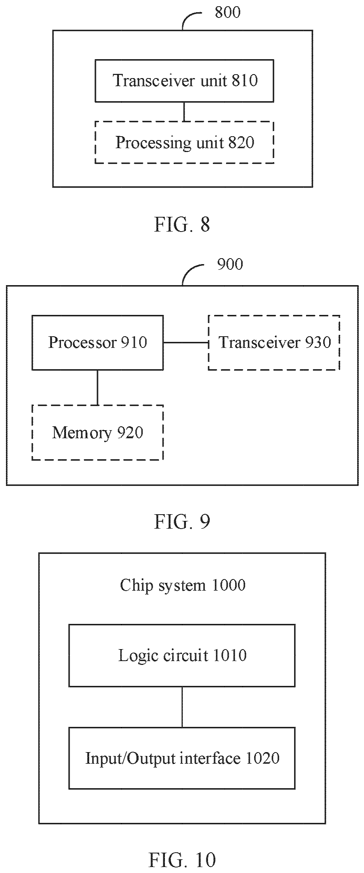

The foregoing describes in detail the communication methods provided in embodiments of this application with reference to FIG. 3 to FIG. 7. The following describes in detail the communication apparatuses provided in embodiments of this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, details of a part of content are not described herein again.

FIG. 8 is a block diagram of a communication apparatus according to an embodiment of this application. The apparatus 800 includes a transceiver unit 810, and the transceiver unit 810 may be configured to implement a corresponding communication function. The transceiver unit 810 may also be referred to as a communication interface or a communication unit.

Optionally, the apparatus 800 may further include a processing unit 820, and the processing unit 820 may be configured to perform data processing.

Optionally, the apparatus 800 further includes a storage unit. The storage unit may be configured to store instructions and/or data. The processing unit 820 may read the instructions and/or the data in the storage unit, so that the apparatus implements actions of different terminal devices in the foregoing method embodiments, for example, an action of the first terminal, or the candidate located UE, or the location management network element.

The apparatus 800 may be configured to perform the action performed by the first terminal, the candidate located UE, or the location management network element in the foregoing method embodiments. In this case, the apparatus 800 may be the first terminal, the candidate located UE, or the location management network element, or a component of the first terminal, the candidate located UE, or the location management network element. The transceiver unit 810 is configured to perform receiving and sending-related operations of the first terminal, the candidate located UE, or the location management network element in the foregoing method embodiments. The processing unit 820 is configured to perform a processing-related operation of the first terminal, the candidate located UE, or the location management network element in the foregoing method embodiments.

It should be further understood that the apparatus 800 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the first terminal, the candidate located UE, or the location management network element in the foregoing embodiments, and may be configured to perform procedures and/or steps corresponding to the first terminal, the candidate located UE, or the location management network element in the foregoing method embodiments, or the apparatus 800 may be specifically the first terminal, the candidate located UE, or the location management network element in the foregoing embodiments, may be configured to perform procedures and/or steps corresponding to the first terminal, the candidate located UE, or the location management network element in the foregoing method embodiments. To avoid repetition, details are not described herein again.

The apparatus 800 in the foregoing solutions has a function of implementing corresponding steps performed by the first terminal, the candidate located UE, or the location management network element in the foregoing methods, or the apparatus 800 in the foregoing solutions has a function of implementing corresponding steps performed by the first terminal, the candidate located UE, or the location management network element in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 810 may alternatively be a transceiver circuit (for example, may include a receiving circuit and a sending circuit), and the processing unit may be a processing circuit.

It should be noted that the apparatus in FIG. 8 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 9, an embodiment of this application provides another communication apparatus 900. The apparatus 900 includes a processor 910. The processor 910 is coupled to a memory 920, the memory 920 is configured to store a computer program or instructions and/or data, and the processor 910 is configured to: execute the computer program or the instructions stored in the memory 920, or read the data stored in the memory 920, to perform the method in the foregoing method embodiments.

Optionally, there are one or more processors 910.

Optionally, there are one or more memories 920.

Optionally, the memory 920 and the processor 910 are integrated or disposed separately.

Optionally, as shown in FIG. 9, the apparatus 900 further includes a transceiver 930. The transceiver 930 is configured to receive and/or send a signal. For example, the processor 910 is configured to control the transceiver 930 to receive and/or send a signal.

In a solution, the apparatus 900 is configured to implement an operation performed by the first terminal, the candidate located UE, or the location management network element in the foregoing method embodiments.

For example, the processor 910 is configured to execute the computer program or the instructions stored in the memory 920, to implement related operations of the first terminal in the foregoing method embodiments, for example, the first terminal in any one of the embodiments shown in FIG. 3 to FIG. 7, or the method of the first terminal in any one of the embodiments shown in FIG. 3 to FIG. 7.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes multiple forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

As shown in FIG. 10, an embodiment of this application provides a chip system 1000. The chip system 1000 (or may be referred to as a processing system) includes a logic circuit 1010 and an input/output interface (input/output interface) 1020.

The logic circuit 1010 may be a processing circuit in the chip system 1000. The logic circuit 1010 may be coupled to and connected to a storage unit, and invoke instructions in the storage unit, to cause the chip system 1000 to implement the methods and functions in embodiments of this application. The input/output interface 1020 may be an input/output circuit in the chip system 1000, and outputs information processed by the chip system 1000, or inputs to-be-processed data or signaling information into the chip system 1000 for processing.

In a solution, the chip system 1000 is configured to implement an operation performed by the first terminal, the candidate located UE, or the location management network element in the foregoing method embodiments.

For example, the logic circuit 1010 is configured to implement a processing related operation performed by the first terminal in the foregoing method embodiments, for example, a processing related operation performed by the first terminal in any one of the embodiments shown in FIG. 3 to FIG. 7. The input/output interface 1020 is configured to implement sending and/or receiving related operations performed by the first terminal in the foregoing method embodiments, for example, sending and/or receiving related operations performed by the first terminal in any one of the embodiments shown in FIG. 3 to FIG. 7.

An embodiment of this application further provides a computer-readable storage medium, where the computer-readable storage medium stores computer instructions used to implement the method performed by the first terminal, the candidate located UE, or the location management network element in the foregoing method embodiments.

For example, when the computer program is executed by a computer, the computer can implement the method executed by the first terminal, the candidate located UE, or the location management network element in the foregoing method embodiments.

An embodiment of this application further provides a computer program product, including instructions. When the instructions are executed by a computer, the method performed by the first terminal, the candidate located UE, or the location management network element in the foregoing method embodiments is implemented.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first terminal, information about one or more candidate located UEs; and
determining, by the first terminal from the one or more candidate located UEs based on the information about the one or more candidate located UEs, a located UE used to assist in positioning the first terminal, wherein
the information about the candidate located UE comprises at least one of the following:
location information, a mobility status, line of sight information, a serving network identifier of the candidate located UE, sidelink positioning capability information, a period of a ranging reference signal, information indicating whether sidelink positioning calculation is supported, and location accuracy of the candidate located UE, wherein
the location information indicates a location of the candidate located UE, the line of sight information comprises information indicating line of sight propagation or non line of sight propagation between the first terminal and the candidate located UE, and the sidelink positioning capability information indicates a sidelink positioning method supported by the candidate located UE.

2. The method according to claim 1, wherein the method further comprises:
obtaining, by the first terminal, first information; and
the determining, by the first terminal from the one or more candidate located UEs based on the information about the one or more candidate located UEs, the located UE used to assist in positioning the first terminal comprises:
determining, by the first terminal, the located UE from the one or more candidate located UEs based on the information about the one or more candidate located UEs and the first information, wherein the first information comprises a number of needed located UEs and/or a public land mobile network PLMN identifier, and the PLMN identifier is a serving network identifier corresponding to a located UE that is allowed to be used by the first terminal.

3. The method according to claim 1, wherein the method further comprises:
receiving, by the first terminal, second information from a location management network element, wherein the second information comprises at least one of the following: a target area, a number of needed located UEs, a location accuracy requirement of the located UE, and located UE selection indication information; and
the determining, by the first terminal from the one or more candidate located UEs based on the information about the one or more candidate located UEs, the located UE used to assist in positioning the first terminal comprises:
determining, by the first terminal, the located UE from the one or more candidate located UEs based on the information about the one or more candidate located UEs and the second information.

4. The method according to claim 3, wherein when the second information is the located UE selection indication information, the determining, by the first terminal from the one or more candidate located UEs based on the information about the one or more candidate located UEs, the located UE used to assist in positioning the first terminal comprises:
when the located UE selection indication information indicates that the first terminal selects a located UE, determining, by the first terminal, the located UE from the one or more candidate located UEs based on the information about the one or more candidate located UEs.

5. The method according to any one of claims 1 to 4, wherein the method further comprises:
receiving, by the first terminal, identification information of multiple terminals from the location management network element; and
the obtaining, by the first terminal, the information about the one or more candidate located UEs comprises:
obtaining, by the first terminal, the information about the one or more candidate located UEs based on the identification information of the multiple terminals, wherein the multiple terminals comprise the one or more candidate located UEs.

6. The method according to any one of claims 1 to 5, wherein the obtaining, by the first terminal, the information about the one or more candidate located UEs comprises:
sending, by the first terminal, a discovery message, wherein the discovery message is used to discover the candidate located UE;
receiving, by the first terminal, one or more response messages from the one or more candidate located UEs; and
obtaining, by the first terminal, the information about the one or more candidate located UEs based on the one or more response messages.

7. The method according to claim 6, wherein the discovery message comprises the identification information of the multiple terminals, the multiple terminals comprise the one or more candidate located UEs, and the response message comprises the information about the candidate located UE.

8. The method according to any one of claims 1 to 5, wherein the obtaining, by the first terminal, the information about the one or more candidate located UEs comprises:
receiving, by the first terminal, one or more announcement messages from the one or more candidate located UEs, wherein the announcement message is used to broadcast that the candidate located UE is capable of serving as the located UE; and
obtaining, by the first terminal, the information about the one or more candidate located UEs based on the one or more announcement messages.

9. A communication method, comprising:
determining, by a candidate located UE, that the candidate located UE is authorized to be a located UE for assisted positioning; and
sending, by the candidate located UE, information about the candidate located UE, wherein the information about the candidate located UE is used for selection of the located UE, and
the information about the candidate located UE comprises at least one of the following:
location information, a mobility status, line of sight information, a serving network identifier of the candidate located UE, sidelink positioning capability information, a period of a ranging reference signal, information indicating whether sidelink positioning calculation is supported, and location accuracy of the candidate located UE, wherein
the location information indicates a location of the candidate located UE, the line of sight information comprises information indicating line of sight propagation or non line of sight propagation between the first terminal and the candidate located UE, and the sidelink positioning capability information indicates a sidelink positioning method supported by the candidate located UE.

10. The method according to claim 9, wherein the sending, by the candidate located UE, the information about the candidate located UE comprises:
when the candidate located UE is in a stationary state or a stable state or a non-moving state, sending, by the candidate located UE, the information about the candidate located UE; or
when the location accuracy of the candidate located UE is greater than a first threshold, sending, by the candidate located UE, the information about the candidate located UE.

11. The method according to claim 9 or 10, wherein the sending, by the candidate located UE, the information about the candidate located UE comprises:
receiving, by the candidate located UE, a discovery message from the first terminal, wherein the discovery message is used to discover the candidate located UE; and
sending, by the candidate located UE, a response message to the first terminal based on the discovery message, wherein the response message comprises the information about the candidate located UE.

12. The method according to claim 11, wherein the discovery message comprises identification information of multiple terminals; and
the sending, by the candidate located UE, the response message to the first terminal based on the discovery message comprises:
when the candidate located UE determines that the identification information of the multiple terminals comprises the candidate located UE, sending, by the candidate located UE, the response message to the first terminal.

13. The method according to claim 9 or 10, wherein the sending, by the candidate located UE, the information about the candidate located UE comprises:
sending, by the candidate located UE, an announcement message to the first terminal, wherein the announcement message is used to broadcast that the candidate located UE is capable of serving as the located UE, and the announcement message comprises the information about the candidate located UE.

14. A communication method, comprising:
determining, by a location management network element, that a located UE is needed for positioning of a first terminal, wherein the located UE is configured to assist in positioning the first terminal; and
sending, by the location management network element, second information to the first terminal, wherein the second information is used by the first terminal to determine the located UE, and
the second information comprises at least one of the following: a target area, a number of needed located UEs, a location accuracy requirement of the located UE, and located UE selection indication information.

15. The method according to claim 14, wherein the method further comprises:
sending, by the location management network element, identification information of multiple terminals to the first terminal, wherein identifiers of the multiple terminals are used by the first terminal to obtain information about one or more candidate located UEs, and the multiple terminals comprise the one or more candidate located UEs.

16. The method according to claim 15, wherein the method further comprises:
determining, by the location management network element, the identification information of the multiple terminals based on location information of the multiple terminals and location information of the first terminal; or
determining, by the location management network element, the identification information of the multiple terminals based on a sidelink positioning capability of the first terminal and sidelink positioning capabilities of the multiple terminals.

17. The method according to any one of claims 14 to 16, wherein the method further comprises:
determining, by the location management network element, the second information.

18. The method according to claim 17, wherein when the second information comprises the target area, the determining, by the location management network element, the second information comprises:
determining, by the location management network element, the target area based on location information of a base station corresponding to a measured cell; or
determining, by the location management network element, a location of the first terminal based on location information of a base station corresponding to a measured cell and positioning measurement data, and determining the target area based on the location of the first terminal; or
obtaining, by the location management network element, the target area from a network data analysis function NWDAF.

19. The method according to claim 17, wherein when the second information comprises the number of needed located UEs, the determining, by the location management network element, the second information comprises:
determining, by the location management network element, the number of needed located UEs based on a location accuracy requirement of the first terminal or subscription information of the first terminal; or
determining, by the location management network element, the number of needed located UEs based on a location accuracy requirement of the first terminal and a correspondence between the location accuracy requirement of the first terminal and the number of located UEs.

20. The method according to claim 17, wherein when the second information comprises the location accuracy requirement of the located UE, the determining, by the location management network element, the second information comprises:
determining, by the location management network element, the location accuracy requirement of the located UE based on a positioning accuracy requirement of the first terminal.

21. A communication apparatus, comprising:
a processor, configured to execute a computer program stored in a memory, so that the communication apparatus performs the method according to any one of claims 1 to 20.

22. A computer-readable storage medium, wherein the computer-readable storage medium stores a computer program or instructions, and when the computer program or the instructions are executed by a processor, the method according to any one of claims 1 to 20 is performed.

23. A computer program product comprising instructions, wherein when the instructions are run on a computer, the method according to any one of claims 1 to 20 is performed.

24. A chip system, comprising a processor, configured to invoke a computer program or instructions from a memory and run the computer program or the instructions, so that a communication apparatus on which the chip system is installed implements the method according to any one of claims 1 to 20.
